# EUROPEAN PATENT APPLICATION

(11) **EP 4 394 683 A1**
(43) Date of publication of application: **03.07.2024**
(21) Application number: 22882782.0
(22) Date of filing: 17.10.2022
(51) Int. Cl.: G06Q 30/02

(54) **SPLASH AD DISPLAY METHOD AND RELATED DEVICE**

(30) Priority: 18.10.2021 CN 202111211752
(71) Applicant: Huawei Technologies Co., Ltd., Shenzhen, Guangdong 518129 (CN)
(72) Inventor: ZHU, Zonglu, Shenzhen, Guangdong 518129 (CN); JIN, Youqi, Shenzhen, Guangdong 518129 (CN); WANG, Xing, Shenzhen, Guangdong 518129 (CN); JIANG, Ming, Shenzhen, Guangdong 518129 (CN)
(74) Representative: Gill Jennings & Every LLP
(86) International application number: PCT/CN2022/125584
(87) International publication number: WO 2023/066176

(57) **Abstract**

A splash advertisement display method and a related device are provided. The method includes: A terminal device displays a splash advertisement; the terminal device detects a first operation of a user, where the first operation is an operation of clicking a preset area; and the terminal device displays a first interface of a first application, where the first interface includes a first advertisement, and content of the first advertisement is related to content of the splash advertisement.

## Description

This application claims priority to Chinese Patent Application No. 202111211752.9, filed with the China National Intellectual Property Administration on October 18, 2021 and entitled "SPLASH ADVERTISEMENT DISPLAY METHOD AND RELATED DEVICE", which is incorporated herein by reference in its entirety.

### TECHNICAL FIELD

This application relates to the communication field, and more specifically, to an advertisement display method and a related device.

### BACKGROUND

A splash advertisement is a type of advertisement displayed by a terminal device, which is an advertisement displayed after a user opens an application and before the app displays content, and is of the highest value in advertisement resources. When detecting that the user starts an application, the terminal device may send a splash advertisement request to an advertisement server, and the advertisement server searches an advertisement resource pool for a target advertisement that matches the advertisement request, and returns advertisement information to the terminal device. The terminal device may further obtain an advertisement material of the target advertisement from the advertisement server based on the advertisement information, and display the advertisement material of the target advertisement in a display interface of the terminal device.

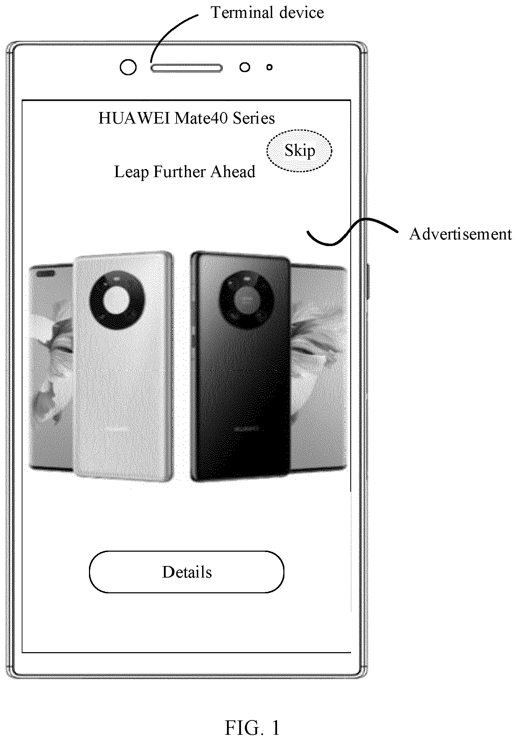

An interface obtained when the terminal device displays a splash advertisement is shown in FIG. 1. Generally, a page of the splash advertisement includes a details viewing area, and the details viewing area may be redirected to a details page or a purchase page of a product. In a conventional technology, when the user wants to further view advertisement content, the user needs to click a specific area, for example, a "Details" area in FIG. 1, to trigger an application to be redirected to a page associated with the splash advertisement. If the user does not click the specific area, after advertisement play is completed, the user may no longer see the advertisement (the advertisement server may return a new advertisement when the app is reopened). In this case, because a range of the specific area is small, and the user needs to click the specific area, a click-through rate of the advertisement is not high, affecting an exposure rate and value of the advertisement.

### SUMMARY

This application provides a splash advertisement display method. An advertisement server displays, based on an area clicked by a user, a first advertisement associated with a splash advertisement in a process of using an application by the user, thereby increasing display frequency and conversion efficiency of the first advertisement.

According to a first aspect, a splash advertisement display method is provided. The method includes: A terminal device displays a splash advertisement. The terminal device detects a first operation of a user, where the first operation is an operation of clicking a preset area. The terminal device displays a first interface of a first application, where the first interface includes a first advertisement, and content of the first advertisement is related to content of the splash advertisement.

In the method provided in the first aspect, the preset area is an area of the splash advertisement, the preset area does not belong to a skip area of the splash advertisement, and the preset area does not belong to a details viewing area; or the preset area is an advertisement picture display area of the splash advertisement.

In the method provided in the first aspect, the first interface includes a home page of the first application, or the first interface includes a slide-down page of the home page of the first application, or the first interface includes a video play page.

The method provided in the first aspect further includes: The terminal device displays a second splash advertisement. The terminal device determines that the user does not click a skip area and the user does not click a details viewing area. The terminal device displays a second interface of the first application, where the second interface includes a second advertisement, and content of the second advertisement is related to content of the second splash advertisement.

In the method provided in the first aspect, the first advertisement is a banner advertisement, or the first advertisement is an interstitial advertisement, or the first advertisement is a floating icon advertisement, and the floating icon advertisement is displayed above a page of the first application.

In the method provided in the first aspect, the second advertisement is a banner advertisement, or the second advertisement is an interstitial advertisement, or the second advertisement is a floating icon advertisement, and the floating icon advertisement is displayed above a page of the first application.

In the method provided in the first aspect, preset duration is set for the floating icon, and the floating icon advertisement is displayed on the page of the first application within the preset duration.

In the method provided in the first aspect, the method further includes: The terminal device detects a second operation performed by the user on the first advertisement, and displays an advertisement landing page of the first advertisement in response to the second operation.

In the method provided in the first aspect, the method further includes: The terminal device detects a third operation performed by the user on the splash advertisement, and displays an advertisement landing page of the splash advertisement in response to the third operation, where the advertisement landing page of the splash advertisement is the same as the advertisement landing page of the first advertisement.

In the method provided in the first aspect, before a terminal device displays a splash advertisement, the method further includes: The terminal device sends a splash advertisement request to an advertisement server. The terminal device receives a returned message sent by the advertisement server in response to the splash advertisement request, where the returned message includes splash advertisement information and a first advertisement information set, the first advertisement information set includes one or more pieces of first advertisement information, and advertisement content of the one or more first advertisements is related to advertisement content of the splash advertisement. The terminal device obtains an advertisement material of the splash advertisement and an advertisement material of the first advertisement based on the returned message.

In the method provided in the first aspect, the splash advertisement request includes one or more of the following parameters: a pre-loading identifier, an advertisement slot identifier, a device identifier, a user identifier, user behavior data, and the like.

In the method provided in the first aspect, the terminal device detects a fourth operation of the user, where the fourth operation is an operation of clicking the skip area. The terminal device displays a third interface of the first application, and the third interface displays a third advertisement, where content of the third advertisement is unrelated to the content of the splash advertisement. The terminal device obtains an advertisement material of the third advertisement based on a second returned message.

In the method provided in the first aspect, that the terminal device displays a third interface of the first application, and the third interface displays a third advertisement specifically includes: The terminal device sends a third advertisement request to the advertisement server, where the third advertisement request is used to request advertisement information to be displayed in the third interface from the advertisement server. The terminal device receives the second returned message sent by the advertisement server in response to the third advertisement request, where the second returned message includes third advertisement information, and advertisement content of the third advertisement information is unrelated to the advertisement content of the splash advertisement.

In the method provided in the first aspect, the terminal device detects the fourth operation of the user, where the fourth operation is the operation of clicking the skip area. The terminal device displays the third interface of the first application, and the third interface does not display the first advertisement.

In the method provided in the first aspect, before the terminal device sends a splash advertisement request to an advertisement server, the method further includes: The terminal device obtains a first operation of the user, where the first operation is an operation used to open an application.

In the method provided in the first aspect, the returned message includes one or more of the following parameters: a download link of an advertisement material, an identifier of an advertisement, a name of the advertisement, a package name of an application, and address information of the terminal device.

In the method provided in the first aspect, that the terminal device obtains an advertisement material of the splash advertisement and an advertisement material of the first advertisement based on the returned message specifically includes: The terminal device downloads the advertisement material of the splash advertisement and the advertisement material of the first advertisement from the advertisement server. Alternatively, the terminal device determines whether the advertisement material of the splash advertisement and the advertisement material of the first advertisement are locally cached, and if the advertisement material of the splash advertisement and the advertisement material of the first advertisement are locally cached, the terminal device obtains the advertisement material of the splash advertisement and the advertisement material of the first advertisement locally.

According to a second aspect, a terminal device is provided. The terminal device includes a processor and a memory, the processor is coupled to the memory, the memory stores program instructions, and when the program instructions stored in the memory are executed by the processor, the method in any possible implementation of the first aspect is performed.

According to a third aspect, a computer-readable storage medium is provided. The computer-readable storage medium stores a computer program, and when the computer program is executed, the method in any possible implementation of the first aspect is performed.

According to a fourth aspect, a chip is provided. The chip includes a processor, configured to invoke a computer program from a memory and run the computer program, to enable a communication device on which the chip is installed to perform the method in any possible implementation of the first aspect.

### BRIEF DESCRIPTION OF DRAWINGS

FIG. 1 is a schematic diagram of a splash advertisement in a conventional technology;
FIG. 2 is a schematic diagram of an example of an architecture of a communication system applicable to an embodiment of this application;
FIG. 3A to FIG. 3C are schematic diagrams of another example of an architecture of a communication system applicable to an embodiment of this application;
FIG. 4 is a schematic block diagram of an example of a communication structure according to an embodiment of this application;
FIG. 5A to FIG. 5C are a schematic flowchart of an example of an advertisement display method according to this application;
FIG. 6A and FIG. 6B are a schematic flowchart of another example of an advertisement display method according to this application;
FIG. 7A and FIG. 7B are a schematic flowchart of another example of an advertisement display method according to this application;
FIG. 8 is a schematic diagram of an example interface in which an advertiser creates an advertisement on an advertising platform according to this application;
FIG. 9A to FIG. 9E are schematic diagrams of an example interface in which a terminal device displays an advertisement according to this application;
FIG. 10A to FIG. 10I are schematic diagrams of another example interface in which a terminal device displays an advertisement according to this application;
FIG. 11A to FIG. 11D are schematic diagrams of another example interface in which a terminal device displays an advertisement according to this application;
FIG. 12 is a schematic diagram of another example interface in which a terminal device displays an advertisement according to this application; and
FIG. 13A and FIG. 13B are schematic diagrams of an example in which a terminal device requests an advertisement from an advertisement server in an operating system of the terminal device.

### DESCRIPTION OF EMBODIMENTS

Technical solutions in this application are described below with reference to the accompanying drawings.

In descriptions of embodiments of this application, "/" means "or" unless otherwise specified. For example, A/B may indicate A or B. In this specification, "and/or" describes only an association relationship of associated objects and indicates that three relationships may exist. For example, A and/or B may indicate the following three cases: Only A exists, both A and B exist, and only B exists. In addition, in the descriptions of embodiments of this application, "a plurality of" means "two or more".

In the following descriptions, the terms "first" and "second" are merely intended for a purpose of description, and shall not be interpreted as indicating or implying relative importance or implying a quantity of indicated technical features. Therefore, a feature defined with "first" or " second" may explicitly or implicitly include one or more features. In the descriptions of embodiments, unless otherwise specified, "a plurality of" means two or more.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, a computer-readable medium may include but is not limited to a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a wireless channel, and various other media that can store, include and/or carry instructions and/or data.

The technical solutions of embodiments of this application may be applied to various communication systems, for example, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a 5th generation (5th Generation, 5G) system, or a new radio (New Radio, NR) system.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, a computer-readable medium may include but is not limited to a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a wireless channel, and various other media that can store, include and/or carry instructions and/or data.

During specific implementation, a terminal device 11 may be a desktop computer, a laptop computer, a tablet computer, a handheld computer, a mobile phone, a notebook computer, an ultra-mobile personal computer (Ultra-mobile Personal Computer, UMPC), a netbook, a cellular phone, a personal digital assistant (Personal Digital Assistant, PDA), a dedicated media player, a consumer electronic device, a wearable device, an AR (augmented reality)/VR (virtual reality) device, or the like.

The term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language like Java or an extensible markup language (extensible markup language, XML). Interface source code is parsed and rendered on an electronic device, and is finally presented as content that can be identified by the user. The user interface is generally represented in a form of a graphical user interface (graphical user interface, GUI), and is a user interface that is related to a computer operation and that is displayed in a graphic manner. The user interface may be a visual interface element that is displayed in a display of the electronic device, for example, a text, an icon, a button, a menu, a tab, a text box, a dialog box, a status bar, a navigation bar, or a widget.

Advertising is a process in which an advertiser uses applications to spread information about commodities or services to users, to improve brand awareness and brand image, promote services, expand product sales, and increase service revenues. An advertisement includes an advertisement element, and the advertisement element includes but is not limited to a picture, a video, audio, a text, an AR, a VR, and the like.

An advertisement material ID (cacheContentId) is associated with an advertisement material. When an advertiser uploads an advertisement to an advertisement server, a corresponding cacheContentId is allocated to the advertisement. In a subsequent advertisement allocation or request process, a corresponding advertisement material is associated by using the cacheContentId.

Advertisement SDK: An SDK (Software Development Kit) is a software development kit. The advertisement SDK provides an advertisement-related function, for example, requests an advertisement from an advertisement server and provides related capabilities such as advertisement display, click, and download. In some embodiments, the advertisement SDK may be directly integrated into an application, so that the application has these advertising capabilities. In some other embodiments, a system-level advertisement SDK may be integrated into the terminal device, and the advertisement SDK is a system module, and may provide an advertisement service for applications on the electronic device 100.

An advertisement resource pool is maintained on a server 12. The advertisement resource pool stores advertisement materials (for example, a text, an image, a video, and audio included in an advertisement) and advertisement information (for example, an advertisement type and an advertisement material link address) uploaded by advertisers.

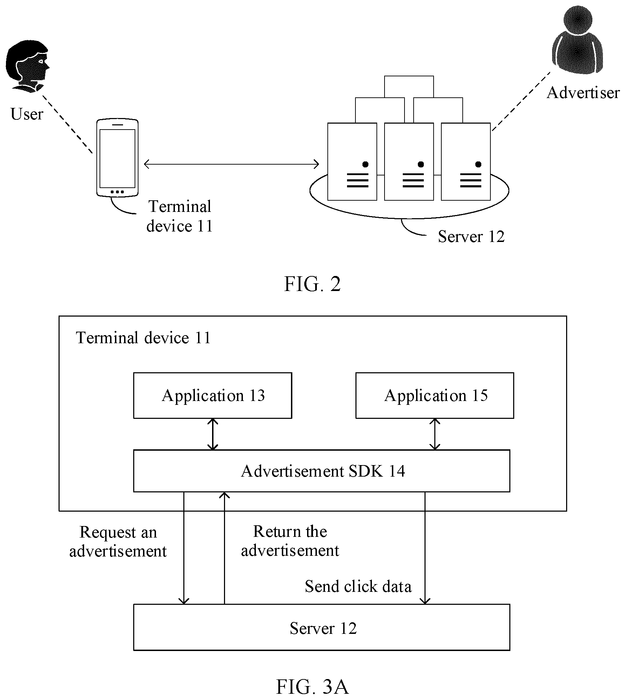

FIG. 2 is a schematic diagram of an example of an architecture of a communication system applicable to an embodiment of this application. As shown in FIG. 2, the communication system includes the terminal device 11 used by a user and the advertisement server 12. An advertiser may upload an advertisement to the advertisement server in advance. Data and information may be transmitted between the terminal device and the advertisement server by using an LTE communication technology, a 5G communication technology, or the like. To request an advertisement, the terminal device may send an advertisement request to the advertisement server upon user trigger. The advertisement server searches the advertisement resource pool for advertisement information (for example, an ID, a name, an advertisement type, and a download link of an advertisement material of a target advertisement) of the target advertisement that matches the advertisement request, and returns the advertisement information to the terminal device. In this case, the terminal device may further obtain the advertisement material of the target advertisement from the advertisement server based on the advertisement information. For example, the terminal device downloads the advertisement material of the target advertisement based on the download link of the advertisement material in the advertisement information, and then displays the advertisement material of the target advertisement in a display interface of the terminal device.

In an embodiment, as shown in FIG. 3A, a plurality of applications (for example, an application 13 and an application 15) are installed on the terminal device 11. A system of the terminal device provides an advertisement SDK 14, and the advertisement SDK 14 may be invoked by the plurality of applications to provide an advertisement service function for the plurality of applications. The advertisement SDK on the terminal device is mainly configured to be integrated into an application, and provide services such as advertisement-related request, play, and event reporting. In addition, the terminal device 11 may further include a cache module and a data obtaining module. The cache module is configured to store a pre-loaded advertisement material, and may be a storage unit in a memory. A user behavior parameter or a device parameter that the data obtaining module is configured to obtain may be obtained by invoking an API of the device.

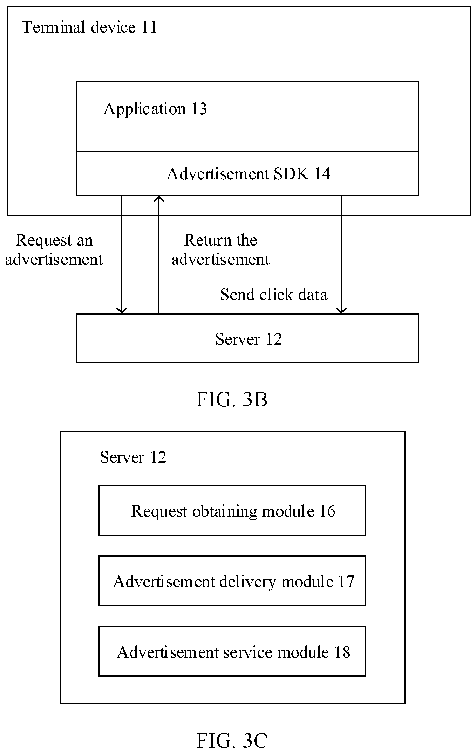

In another embodiment, as shown in FIG. 3B, an advertisement software development kit (software development kit, SDK) module is integrated into an application on the terminal device. In some embodiments, a cache module and a data obtaining module may be further integrated into the application. When the advertisement SDK is directly integrated into a third-party application, for example, a media application, the third-party application has these advertising capabilities.

As shown in FIG. 3C, the advertisement server 12 may include a request obtaining module 16, an advertisement delivery module 17, and an advertisement service module 18. The request obtaining module is configured to obtain an advertisement request of the terminal device, and extract valid advertisement information from the advertisement request, for example, an advertisement type, a user behavior parameter, or a device parameter. The advertisement delivery module may be used by an advertiser to deliver an advertisement according to an advertisement requirement of the advertiser, and store the advertisement delivered by the advertiser in the server. The advertisement service module is configured to match the advertisement request of the terminal device with the delivery requirement of the advertiser, and send a corresponding advertisement to the terminal device.

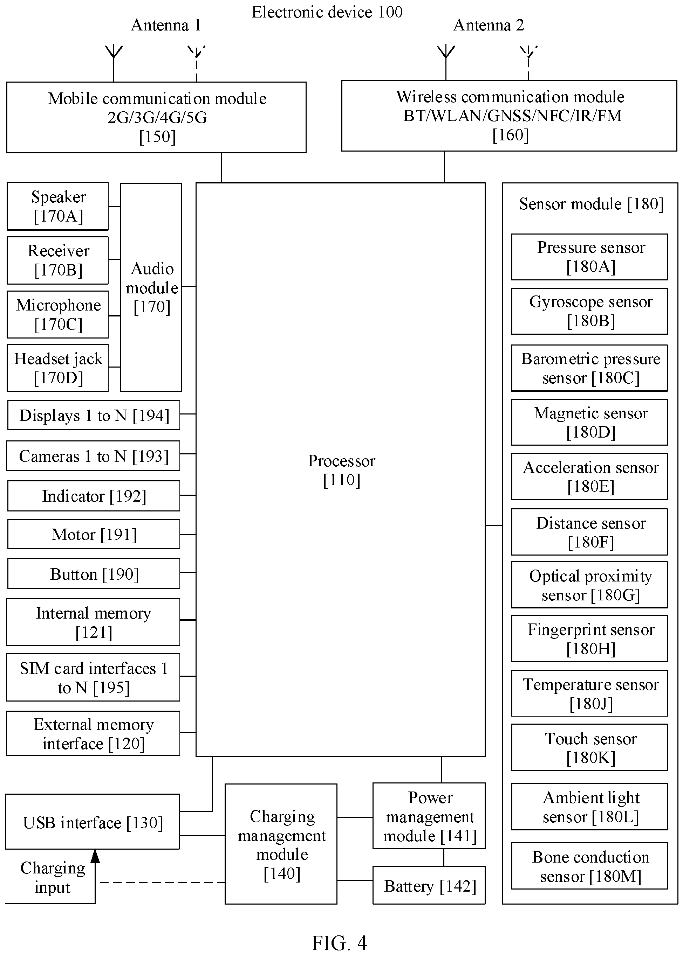

As shown in FIG. 4, in this embodiment of this application, an example in which the terminal device 11 is an electronic device 100 is used for description. It should be understood that the electronic device 100 shown in FIG. 3 is merely an example of the terminal device, and the electronic device 100 may have more or fewer components than those shown in the figure, or may combine two or more components, or may have a different component configuration.

The electronic device 100 may include at least one of the following: a mobile phone, a foldable electronic device, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, or a smart city device. A specific type of the electronic device 100 is not specially limited in embodiments of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a fingerprint sensor 180H, a touch sensor 180K, and the like.

It may be understood that the structure shown in this embodiment of this application constitutes no specific limitation on the electronic device 100. In some other embodiments of this application, the electronic device 100 may include more or fewer components than those shown in the figure, or have some components combined, or have some components split, or have a different component arrangement. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The processor may generate an operation control signal based on instruction operation code and a time sequence signal, to control instruction reading and instruction execution.

A memory may be further disposed in the processor 110, and is configured to store instructions and data. In some embodiments, the memory in the processor 110 may be a cache. The memory may store instructions or data that has been used or frequently used by the processor 110. If the processor 110 needs to use the instructions or the data again, the processor 110 may directly invoke the instructions or the data from the memory. This avoids repeated access and reduces waiting time of the processor 110, thereby improving system efficiency.

In some embodiments, the processor 110 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The processor 110 may be connected to modules such as a touch sensor, an audio module, a wireless communication module, a display, and a camera through at least one type of the foregoing interfaces.

It may be understood that an interface connection relationship between the modules shown in this embodiment of this application is merely an example for description, and constitutes no limitation on a structure of the electronic device 100. In some other embodiments of this application, the electronic device 100 may alternatively use an interface connection manner different from that in the foregoing embodiment, or use a combination of a plurality of interface connection manners.

The USB interface 130 is an interface that conforms to a USB standard specification, may be configured to connect the electronic device 100 and a peripheral device, and may be specifically a mini USB interface, a micro USB interface, a USB type-C interface, or the like. The USB interface 130 may be configured to connect to a charger, so that the charger can charge the electronic device 100, or may be configured to connect to another electronic device, to implement data transmission between the electronic device 100 and the another electronic device, or may be configured to connect to a headset, to output, through the headset, audio stored in the electronic device. The interface may alternatively be configured to connect to another electronic device, for example, a VR device. In some embodiments, a standard specification of the universal serial bus may be USB1.x, USB2.0, USB3.x, and USB4.

The charging management module 140 is configured to receive a charging input of the charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input by using a wireless charging coil of the electronic device 100. The charging management module 140 may supply power to the electronic device by using the power management module 141 while charging the battery 142.

The power management module 141 is configured to connect to the battery 142, the charging management module 140, and the processor 110. The power management module 141 receives an input of the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication bands. Different antennas may be multiplexed to improve antenna utilization. For example, the antenna 1 may be multiplexed as a diversity antenna in a wireless local area network. In some other embodiments, the antennas may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), Bluetooth low energy (Bluetooth low energy, BLE), ultra-wideband (ultra-wideband, UWB), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another electronic device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function by using the GPU, the display 194, the application processor, and the like. The GPU is a microprocessor for image processing and is connected to the display 194 and the application processor. The GPU is configured to perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or more displays 194.

The electronic device 100 may implement a photographing function by using a camera module 193, the ISP, the video codec, the GPU, the display 194, the application processor AP, the neural-network processing unit NPU, and the like.

The digital signal processor is configured to process a digital signal, and may further process another digital signal. For example, when the electronic device 100 selects a frequency, the digital signal processor is configured to perform Fourier transform on frequency energy, and the like.

The video codec is configured to compress or decompress a digital video. The electronic device 100 may support one or more types of video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100 may be implemented by using the NPU, for example, image recognition, facial recognition, voice recognition, and text understanding.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and a video are stored in the external storage card, or files such as music and a video are transmitted from the electronic device to the external storage card.

The internal memory 121 may be configured to store computer-executable program code, and the executable program code includes instructions. The internal memory 121 may include a program storage region and a data storage region. The program storage region may store an operating system, an application required by at least one function (for example, a sound play function and an image play function), and the like. The data storage region may store data (for example, audio data and a phone book) and the like created during use of the electronic device 100. In addition, the internal memory 121 may include a high-speed random access memory, or may include a nonvolatile memory, for example, at least one magnetic disk storage device, a flash storage device, or a universal flash storage (universal flash storage, UFS). The processor 110 runs the instructions stored in the internal memory 121 and/or the instructions stored in the memory disposed in the processor, to perform various function methods or data processing of the electronic device 100.

The electronic device 100 may use the audio module 170, the speaker 170A, the receiver 170B, the microphone 170C, the headset jack 170D, the application processor, and the like to implement an audio function, for example, music play and recording.

The audio module 170 is configured to convert digital audio information into an analog audio signal output, and is also configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an electrical audio signal into a sound signal. The electronic device 100 may be used to listen to music or output an audio signal of a hands-free call by using the speaker 170A.

The receiver 170B, also referred to as an "earpiece", is configured to convert an electrical audio signal into a sound signal. When a call is answered or voice information is received by using the electronic device 100, the receiver 170B may be put close to a human ear for listening to a voice.

The microphone 170C, also referred to as a "mike" or a "mic", is configured to convert a sound signal into an electrical signal. When making a call or sending voice information, a user may make a sound by moving a human mouth close to the microphone 170C, to input a sound signal to the microphone 170C. At least one microphone 170C may be disposed in the electronic device 100. In some other embodiments, two microphones 170C may be disposed in the electronic device 100, to collect a sound signal and further implement a noise reduction function. In some other embodiments, three, four, or more microphones 170C may alternatively be disposed in the electronic device 100, to collect a sound signal, implement noise reduction, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are a plurality of types of pressure sensors 180A, for example, a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The electronic device 100 determines pressure intensity based on a capacitance change. When a touch operation is performed on the display 194, the electronic device 100 detects intensity of the touch operation by using the pressure sensor 180A. The electronic device 100 may further calculate a touch position based on a detection signal of the pressure sensor 180A. In some embodiments, touch operations that are performed on a same touch position but have different touch operation intensity may correspond to different operation instructions. For example, when a touch operation whose touch operation intensity is less than a first pressure threshold is performed on a Messages application icon, an instruction for viewing a short message service message is executed. When a touch operation whose touch operation intensity is greater than or equal to the first pressure threshold is performed on the Messages application icon, an instruction for creating a new short message service message is executed.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor 180K. The touch sensor may transfer the detected touch operation to the application processor to determine a type of the touch event. A visual output related to the touch operation may be provided on the display 194. In some other embodiments, the touch sensor 180K may alternatively be disposed on a surface of the electronic device 100 at a position different from that of the display 194.

The button 190 may include a power button, a volume button, and the like. The button 190 may be a mechanical button or a touch button. The electronic device 100 may receive a button input, and generate a button signal input related to a user setting and function control of the electronic device 100.

In some embodiments of this application, that a terminal device requests an advertisement may be divided into two processes: The terminal device pre-loads the advertisement and the terminal device requests the advertisement. Specifically, that the terminal device pre-loads the advertisement and that the terminal device requests the advertisement in real time may be two independent processes. The advertisement pre-loaded by the terminal device is an advertisement material that is pre-extracted and cached in a storage unit. In practice, the user may display (triggering by an advertisement request is needed) an advertisement material after downloading the advertisement material for a long time, or may not request to display the advertisement material. The phase of the terminal device requesting the advertisement may be a process in which the terminal device requests, after receiving user triggering, a to-be-displayed advertisement from a server and displays the advertisement in the terminal device.

In some of the following embodiments, a step in the phase of the terminal device pre-loading the advertisement is similar. For details, refer to the following description.

### Embodiment 1

First phase: pre-loading a splash advertisement by a terminal device

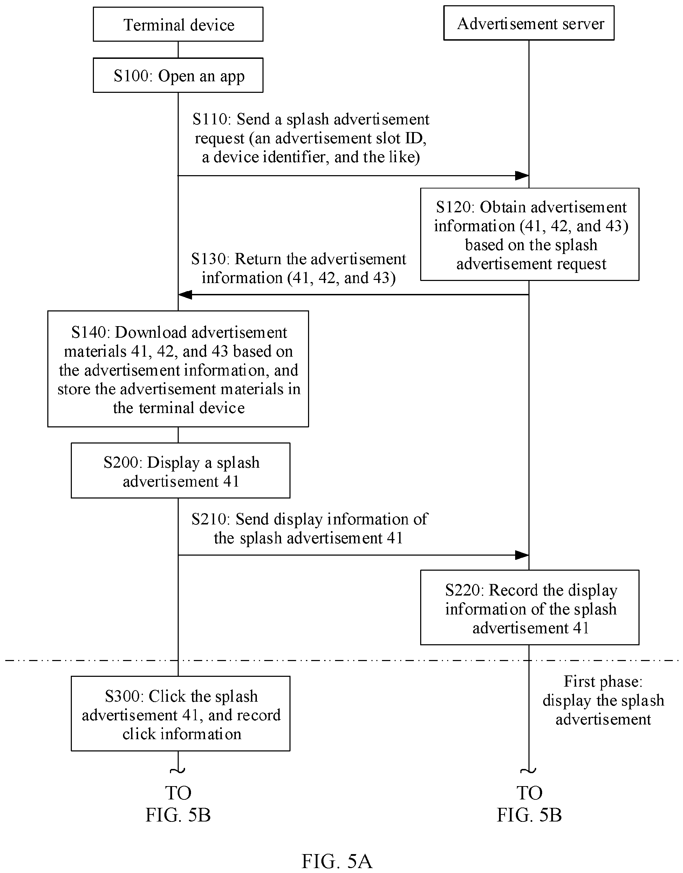

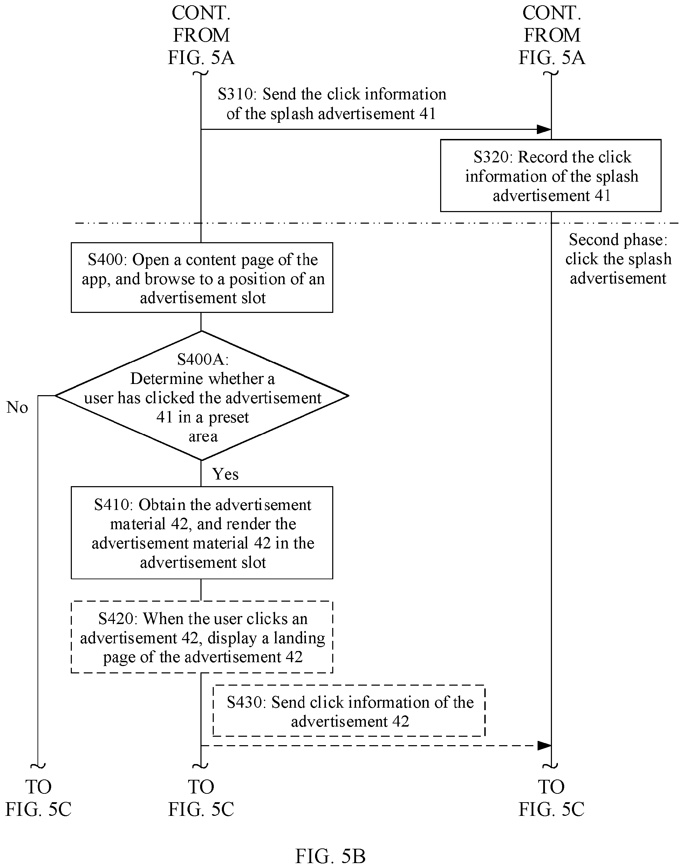

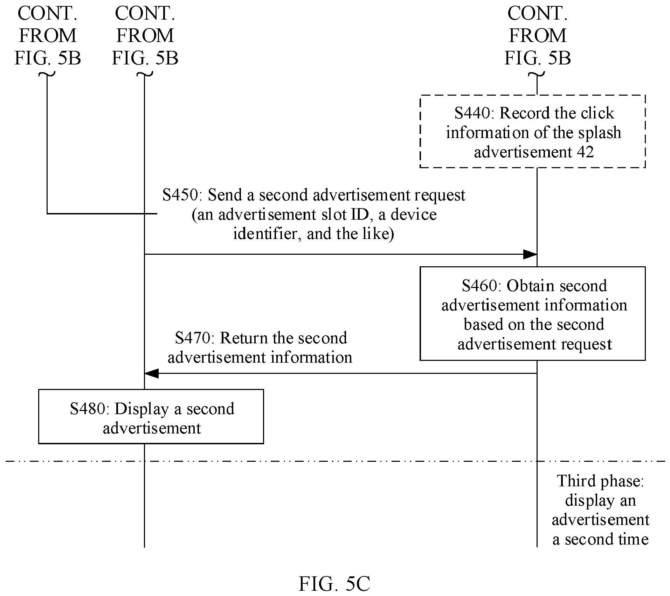

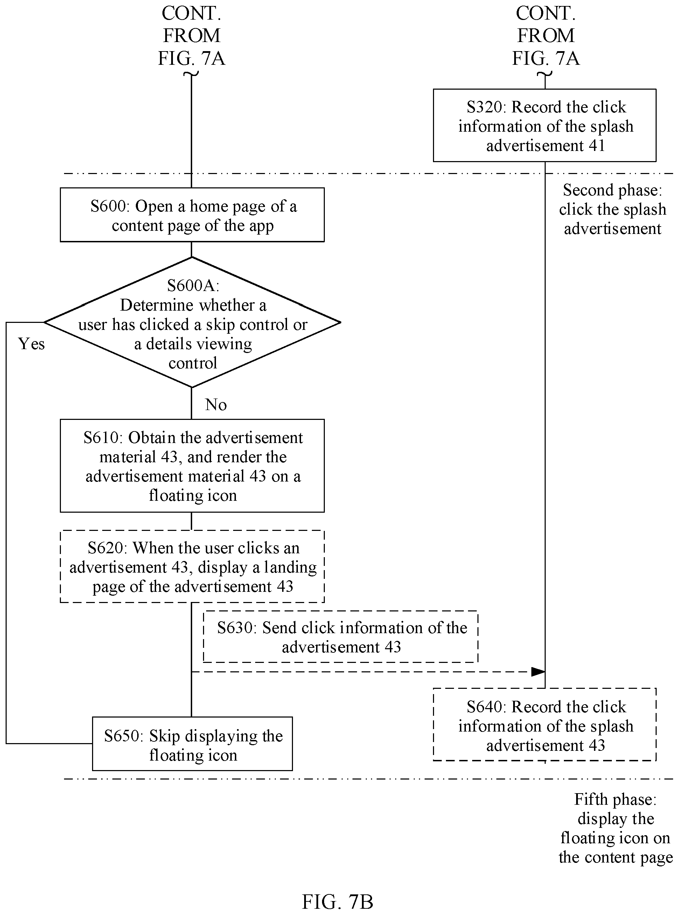

In FIG. 5A to FIG. 5C to FIG. 7A and FIG. 7B, **in S100 and S110, when a user opens an application, the application is triggered to send a first advertisement request, and the terminal device sends the first advertisement request to a server, where the first advertisement request is used to request advertisement information that is to be displayed by the terminal device.**

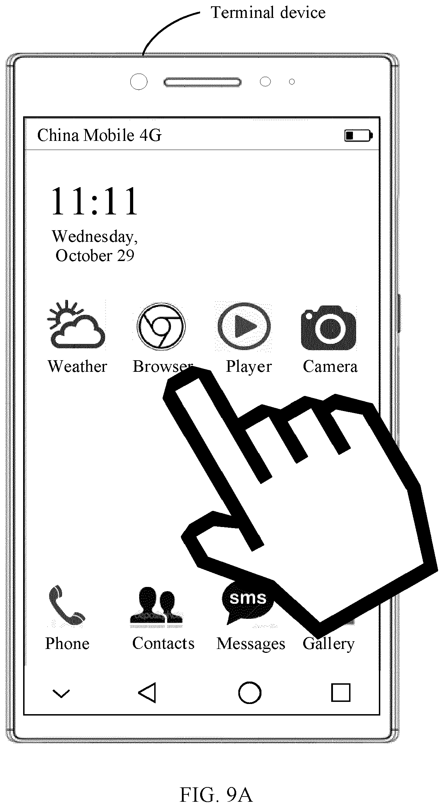

**As shown in** **FIG. 9A****, in an embodiment, when the user opens a browser application, the browser application is triggered to send a first advertisement request.**

In some embodiments, a terminal device 11 may send an advertisement request to a server 12 according to a network protocol like a hypertext transfer protocol (HTTP), a hypertext transfer protocol secure (HTTPS), a file transfer protocol (FTP), or a secure file transfer protocol (SFTP). In some embodiments, an HTTP request method includes OPTIONS, GET, HEAD, POST, PUT, DELETE, TRACE, CONNECT, and the like.

The advertisement request may include device information of the terminal device 11, for example, a device type (devicetype) of the terminal device 11, an operating system version (version) of the terminal device 11, a device maker (maker) of the terminal device 11, a device model (model) of the terminal device 11, an operating system language (language) used by the terminal device 11, an international mobile equipment identity (IMEI), a mobile equipment identifier (MEID), an electronic serial number (ESN), or an Android ID (a unique identifier of an Android device) of the terminal device 11, a media access control (MAC) layer address of the terminal device 11, and the like.

The advertisement request may carry a name of a current application, an application package name (pkgname) of the current application, a version of the application, and the like. Further, the advertisement request includes an open advertising identifier (open advertising identifier, OAID), and the OAID identifies different devices when the device requests an advertisement.

For example, the following advertisement request provides parameters such as an advertisement slot ID ("slotid": "a09itw7hsf') of a splash advertisement and a requested advertisement type ("adtype": 1, which indicates that the advertisement type is a splash advertisement), so that a server receiving the advertisement request can determine advertisement information matching the advertisement request.

An advertisement slot identifier is associated with an advertisement slot in an application, and the advertisement slot is integrated into the application. When the application requests an advertisement, the advertisement slot identifier is carried. When advertisement information returned by the server is received, the application displays, based on the advertisement slot identifier, the advertisement at a corresponding position in the application. The advertisement slot is used to display an advertisement, and the advertisement slot is an area or a window on a page provided by the application. The advertisement slot ID uniquely indicates a specific position that is for displaying an advertisement to be played this time and that is in the current application. The advertisement slot may include a splash advertisement slot, an application advertisement slot, an interstitial advertisement slot, a banner advertisement slot, and the like. The requested advertisement type may include a plurality of types, for example, a banner (banner) advertisement, a splash (splash) advertisement, and a native (native) advertisement. For example, the banner advertisement type is indicated by 0, the splash advertisement type is indicated by 1, and the native advertisement type is indicated by 2.

Further, the advertisement request may include an advertisement slot width ("width": 1080) and an advertisement slot height ("height": 1920) that are used to display the splash advertisement. The advertisement slot width or the advertisement slot height is generally less than a width or a height of a screen of the terminal device 11.

For example, the advertisement request sent by the terminal device 11 to the server 12 is as follows:

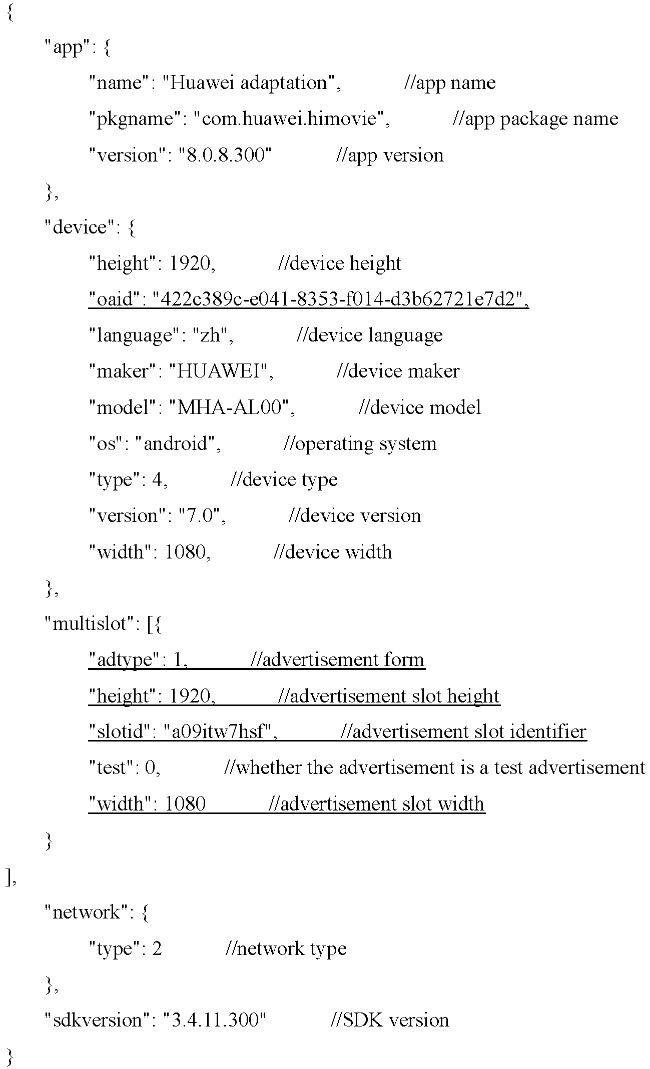

In some embodiments of this application, the advertisement request may further include user behavior data recorded by the terminal device 11 and a device parameter of the terminal device. In some embodiments, the user behavior data includes an ID of a user, a search record of the user, a call record of the user, address information (for example, a recently visited address) of the user, and the like. The server may find a corresponding user profile through the ID of the user, and deliver an advertisement corresponding to the user based on the user profile. The user profile may include: a song type that the user likes, a work habit of the user, a search record of the user, an access record of the user, a call record of the user, address information (for example, a recently visited address) of the user, a gender of the user, an age range of the user, and the like.

In some embodiments, the device parameter may include: whether an application is installed, Wi-Fi information, a device brand, a device model, a device type (a watch, a mobile phone, or a tablet), whether a headset is connected, a current location (GPS data) of the terminal device, an application currently triggered by the terminal device, and the like.

**S120: The server obtains advertisement information based on the first advertisement request.**

When selecting an optimal advertisement or a backup advertisement, the server performs retrieval based on information carried in the advertisement request and an advertisement delivery requirement on a server side. When finding, through retrieval, appropriate advertisement content, the server side obtains an advertisement material corresponding to the advertisement content. The advertisement material includes a splash advertisement, a banner advertisement, an icon advertisement, or an advertisement material corresponding to another type.

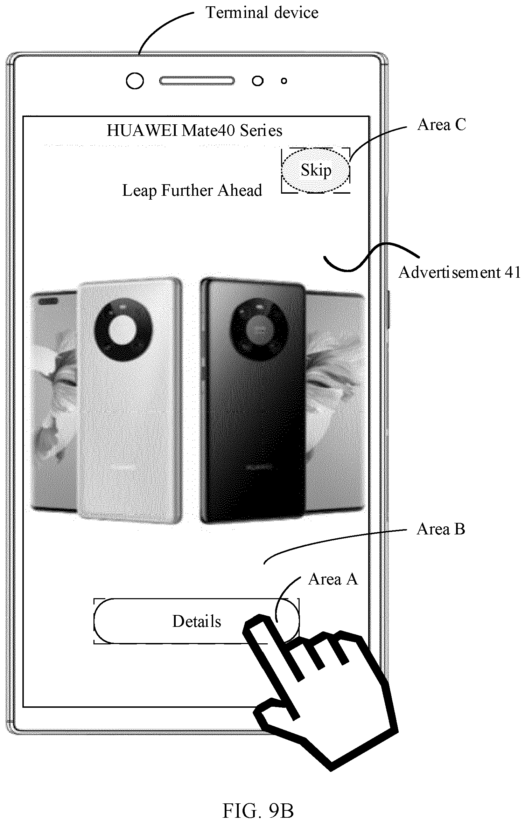

For example, in an embodiment shown in FIG. 9B, the server finds, through retrieval based on the advertisement request, that an advertisement to be displayed is advertisement content of Mate40. After obtaining the advertisement content of Mate40, the server obtains an advertisement material corresponding to the advertisement content of Mate40, for example, obtains advertisement materials of a splash advertisement, a banner advertisement, and an icon advertisement that are corresponding to the advertisement content of Mate40.

In an embodiment, for example, the advertisement request of the terminal device may carry user behavior data, device information of the terminal device 11, or the like. In this way, the server 12 may select, from an advertisement resource pool, an advertisement related to the foregoing information as an optimal advertisement, to improve advertisement display efficiency and user experience of using the application.

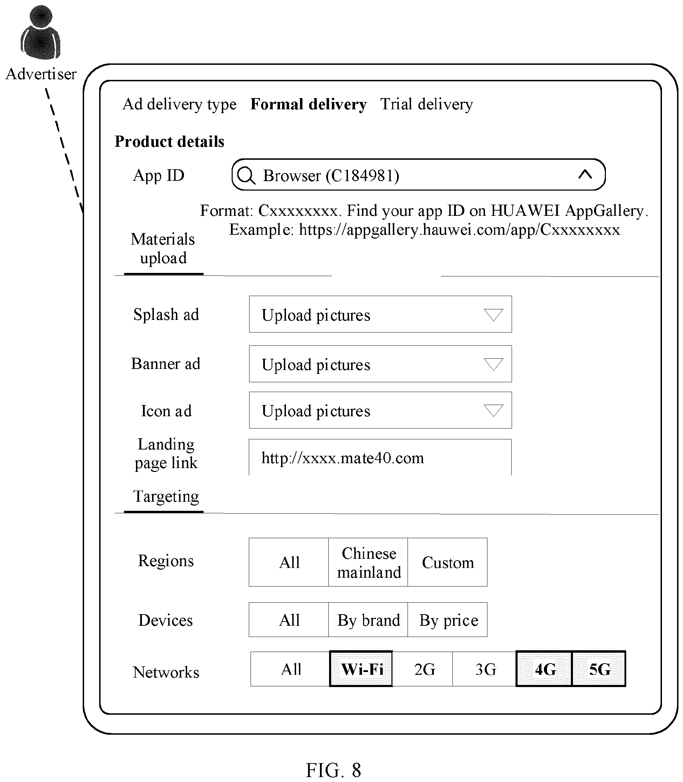

In an embodiment, if an advertiser wants to deliver advertisement content in a plurality of types of advertisements, the advertiser may upload advertisement materials corresponding to the plurality of types of advertisements when delivering an advertisement. As shown in FIG. 8, the advertiser uploads the advertisement materials of the splash advertisement, the banner advertisement, and the icon advertisement that are corresponding to the advertisement content of Mate40. In addition, in the interface, the advertiser may create an advertisement task and set a requirement of an advertisement to be delivered. As shown in the figure, the advertiser may select or input, in a menu bar of "App ID", an application to which a specific advertisement is to be targeted, for example, a "Browser"; or select a region, a device type, a networking manner, and the like in targeting information. The targeting information may further include a gender, an age, whether the application is installed, behavior and a networking manner of the application, and the like.

In some other embodiments, if the advertiser sets no specific targeting information, the server may pre-establish an advertisement prediction model by using a big data mining tool, and deliver the advertisement of the advertiser to a terminal device of a related user based on statistics of big data, to improve an exposure rate of the advertisement. For example, if it is determined, based on user behavior data, that a user is a frequent shopping user, the advertiser sets no specific targeting requirement, and the server determines, based on advertisement content, that an advertisement is a sales advertisement, it is determined that the advertisement is an advertisement associated with target information.

**S130: The advertisement server returns first advertisement information to the terminal device.**

For example, the returned first advertisement information may include a return value (retcode) of a response message. When the advertisement information matching the advertisement request is not found successfully, the response message may further include an error reason (reason) of a response failure.

The advertisement information may include parameters such as an advertisement slot ID (slotid), an advertisement creative type (creativetype), and a material ID (contentid) of an advertisement material that are corresponding to the advertisement request. The advertisement creative type may include types such as a text advertisement, an image advertisement, an image-text advertisement, and a graphics interchange format (GIF) advertisement.

Further, the first advertisement information may include parameters such as an advertisement interaction type (interactiontype), a download link (html) of an advertisement material, a size (for example, a height and a width of the advertisement material) of the advertisement material, and a clickUrl address.

In the returned information, the terminal device may download an image from the server based on a link (a URL link) corresponding to the image. For example, a corresponding image may be downloaded from http://cs.op.hicloud.com/contserver/data/98BE13F2CD19D41 .jpg.

The advertisement interaction type (interactiontype) may include the following interaction types: there is no response to a user click, a related web page is opened after a user click, an application is downloaded after a user click, an application is opened after a user click, and the like. In this embodiment, "interactiontype": 3 indicates that the interaction type is that an application is opened after a user click. The clickUrl address indicates a website link to which a user may be redirected after clicking an advertisement.

For example, returned information sent by the server 12 to the terminal device 11 is as follows:

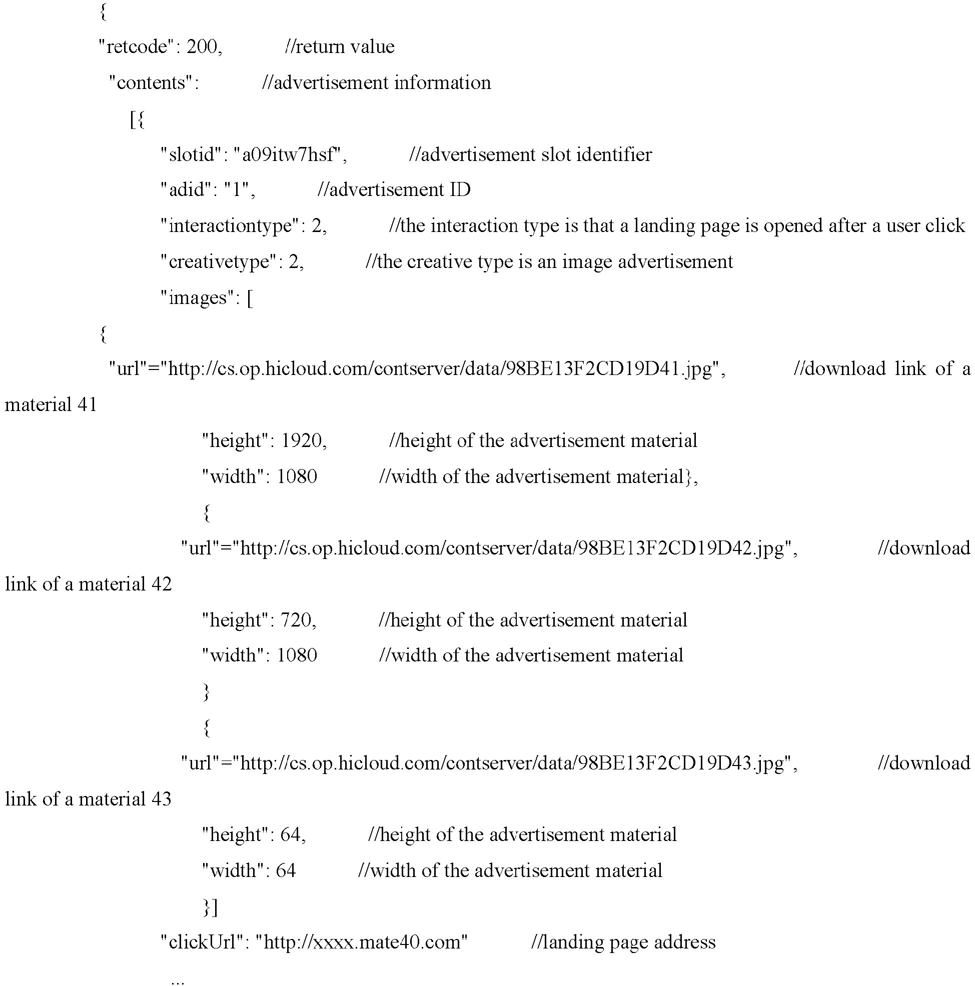

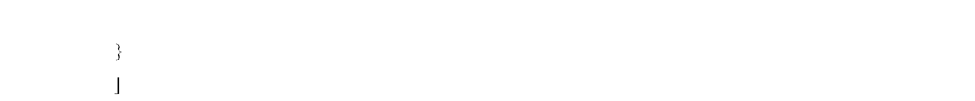

In the returned information, the terminal device may download from the server based on a link (a URL link) corresponding to the advertisement ID. Advertisement materials in the returned information are corresponding to same advertisement content, and are used to display the same advertisement content in different advertisement display forms. For example, the material 41, the material 42, and the material 43 may be three different creative pictures/videos of same advertisement content. The material 41, the material 42, and the material 43 are related to a splash advertisement, a banner advertisement, and an icon advertisement that are corresponding to advertisement content of Mate40. In addition, a corresponding picture may be downloaded from a URL link (for example, http://cs.op.hicloud.com/contserver/data/98BE13F2CD19D41.jpg) corresponding to an advertisement material.

**S140: The terminal device downloads a corresponding advertisement based on the advertisement information, and stores the advertisement in a cache.**

The terminal device stores related information in the advertisement information in a lightweight database (SQLite). Because the lightweight database (SQLite) occupies very low resources, SQLite specially configured to store advertisement information may be disposed in the terminal device 11. SQLite may be a db file, and may be specifically stored in a mobile phone system or an app file path. The advertisement information includes an advertisement ID, a download link of an advertisement material, an advertisement slot identifier, an advertisement type, a width of the advertisement material, a height of the advertisement material, and the like.

For example, the terminal device downloads an advertisement material corresponding to the advertisement information from the advertisement resource pool of the server, and stores the advertisement material locally. After downloading the advertisement material locally, the terminal device may update a storage address of the advertisement material in an SQLite file. The following table is an example for description. An advertisement A has been downloaded and stored at diskcache://b5d132930c6141ff102b6f3b15565.

| slotid | adid | interactiontype | height | width | image | slashMediaPath |
|---|---|---|---|---|---|---|
| a09itw7hsf | 1 | 3 | 1920 | 1080 | http://cs.op.hi...41.jpg | diskcache://b5d132930c614 1ff102b6f3b15565 |
| a09itw7hsf | 1 | 3 | 720 | 1080 | http://cs.op.hi...42.jpg | diskcache://b5d132930c614 1ff102b6f3b15566 |
| a09itw7hsf | 1 | 3 | 64 | 64 | http://cs.op.hi...43.jpg | diskcache://b5d132930c614 1ff102b6f3b15567 |

In some embodiments, an advertisement material may be pre-loaded in the terminal device. For example, a pre-loading advertisement request is sent in a Wi-Fi scenario, and the advertisement material 41, the advertisement material 42, and the advertisement material 43 are first stored in the terminal device. After receiving the returned advertisement information, the user may directly obtain the pre-loaded advertisement material without downloading the advertisement material again. An objective of pre-loading an advertisement by the terminal device is to reduce a delay in a process from advertisement request to displaying an advertisement page by the terminal device. A possible to-be-displayed advertisement is first stored in the terminal device, so that a cached advertisement material may be used when a delay occurs in a subsequent advertisement request process. In addition, the advertisement material is downloaded through Wi-Fi, further reducing mobile traffic consumption for the user. In some embodiments, the terminal device may trigger a pre-loading advertisement request according to a triggering mechanism that is for a pre-loading advertisement request and that is defined by an advertisement SDK, for example, may perform triggering at intervals of N minutes or based on a network status.

**S200: The terminal device obtains an advertisement material corresponding to the splash advertisement, and displays the advertisement material.**

Specifically, the terminal device obtains the corresponding advertisement material 41 based on the advertisement slot ID ("slotid": "a09itw7hsf"), the requested advertisement ID ("adid": 1), the advertisement slot height ("height": 1920), and the advertisement slot width ("width": 1080), and displays the advertisement material. As shown in FIG. 9B, the terminal device displays the advertisement material 41 of a splash advertisement type.

In some other embodiments, as shown in the following, the returned advertisement information may include a type identifier, and the type identifier identifies an advertisement slot in which an advertisement is displayed. For example, "splash" indicates to display the advertisement in a splash advertisement slot, "banner" indicates to display the advertisement in a banner advertisement slot, and " smallicon" indicates to display the advertisement in a floating icon. When an advertisement is to be displayed in an advertisement slot, a corresponding advertisement material may be found based on an advertisement ID and an advertisement type identifier for display.

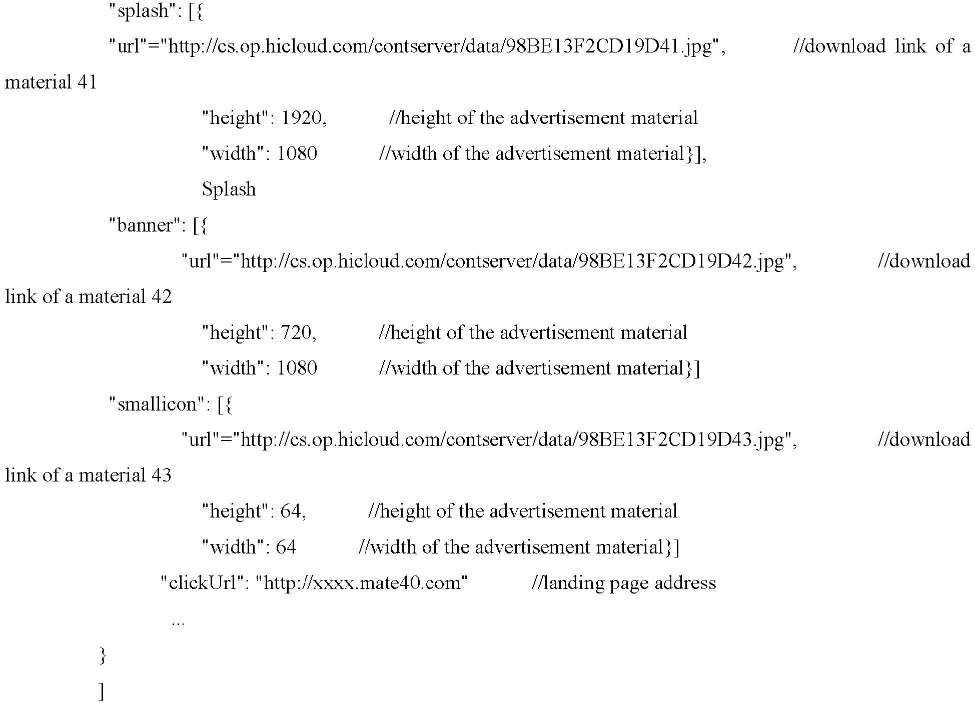

**S210: The terminal device sends display information of the splash advertisement 41 to the server.**

In some embodiments, click information sent by the terminal device 11 to the server 12 includes a ch access channel, an event type, and encrypted string information. For example, the display information sent by the terminal device 11 to the server 12 is as follows:
https://example/contserver/tracker/action?ch=200001&etype=imp &pfsa=pY0N3O53EBde9...BheOXYG4

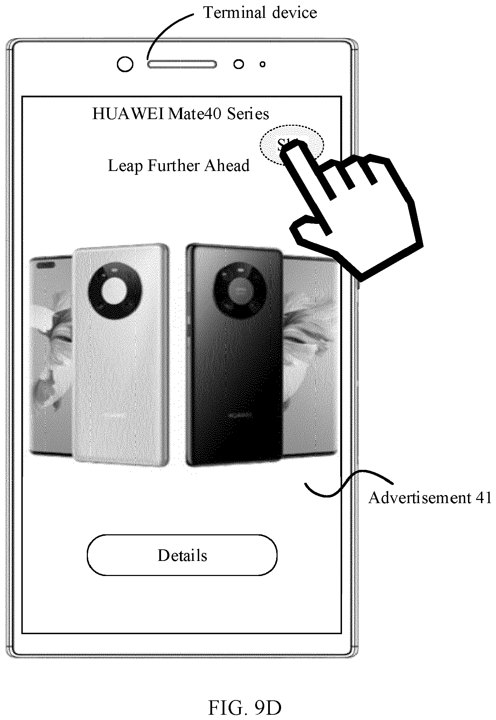

ch=200001 is an access channel defined by the advertisement server, and the access channel is, for example, to access the server by using the advertisement SDK. etype=imp indicates an event type. For example, imp indicates a display event. The event type may further include an advertisement click event (click), an advertisement skip event (skip), an advertisement play event (play), or an advertisement download event (download). As shown in FIG. 1, the terminal device displays an advertisement, but the user does not click the advertisement, then the advertisement event is an advertisement display event. As shown in FIG. 9B, the user opens a landing page of the advertisement by clicking a link in the advertisement, then the event type is an advertisement click event. As shown in FIG. 9D, the terminal device displays the advertisement, and the user clicks a skip area, then the advertisement event is an advertisement skip event. In some embodiments, if the advertisement includes video information, when the user clicks to play a video, the advertisement event in this case is an advertisement play event. If the advertisement is an application recommendation advertisement, when the user downloads an application through the advertisement, the advertisement event in this case is an advertisement download event. Information in pfsa=XXX is encrypted string information, and the encrypted string information may include advertisement information. The advertisement information is included in returned information of an advertisement when the server sends the advertisement to the terminal device. When obtaining the advertisement information, the terminal device obtains the encrypted string information from the returned information. After completing advertisement content display, when reporting an advertisement event to the server, the terminal device sends the advertisement information in the returned information to the server side, so that the server side may further collect statistics on advertisement data based on the advertisement information. For example, the advertisement information may include advertisement ID information that identifies a specific advertisement, and may further include an advertisement charging rule. After completing advertisement display, the terminal device returns the encrypted string information including the advertisement ID and the advertisement charging rule to the server side. In this way, the server may calculate and charge for exposure of the advertisement according to the advertisement charging rule used when the advertisement is requested and with reference to an event type of the terminal device, for example, an advertisement display event or an advertisement click event, so that the statistics on the advertisement data are more accurate.

**S220: The server records the display information of the splash advertisement 41.**

The server calculates a quantity of times of advertisement display based on the returned display information, and may calculate an advertisement fee based on the quantity of times of advertisement display. Specifically, the server calculates and charges for the exposure of the advertisement based on the advertisement ID (which may be obtained from the encrypted string information) in the display information, the advertisement charging rule used when the advertisement is requested, and an advertisement display event of the terminal device.

### Second phase: clicking the splash advertisement

**S300 and S310: After the terminal device displays the advertisement material, the user clicks the splash advertisement, click information of the splash advertisement is sent to the server, and the display information of the splash advertisement is recorded.**

In some embodiments, click information sent by the terminal device 11 to the server 12 includes a ch access channel, an event type, encrypted string information, and a click position. The access channel, the event type, and the encrypted string information are similar to those in step S220. In addition, the click position included in the information may indicate that a control area with a link is clicked, or indicate that a skip area is clicked, or indicate that an area other than the control area with the link and the skip area is clicked.

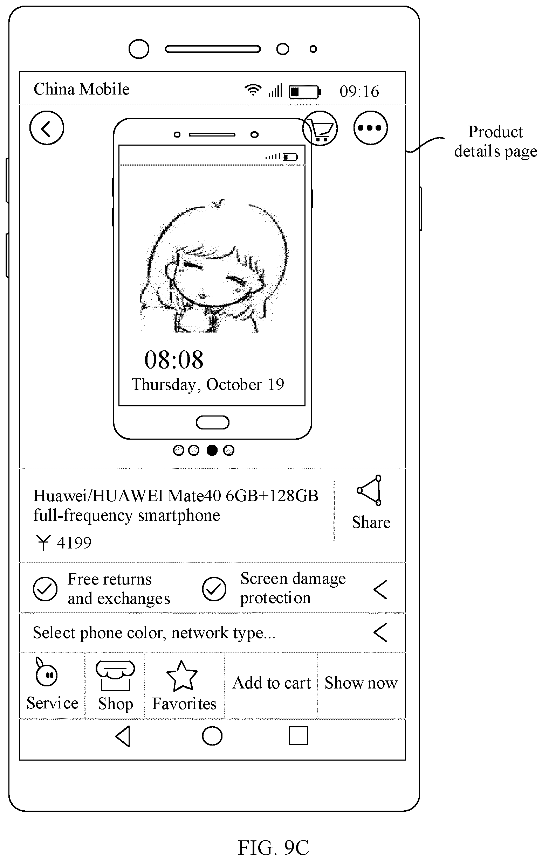

In some embodiments, the click position is position information when the user clicks the advertisement. An advertisement material area may be divided into three areas, as shown in FIG. 9B, which may include an area A, an area B, and an area C. The area A is a control area with a link. For example, the area may be an area of a button "Open details page or third-party application". When the user clicks the area, a landing page link corresponding to the advertisement material may be redirected to, as shown in FIG. 9B and FIG. 9C. For example, in this case, the click information sent by the terminal device to the server is as follows: https://example/contserver/tracker/action?ch=200001 &etype=click &pfsa=pY0N3O53EBde9...BheOXYG4&source=0. Specifically, etype=click indicates that a current event is an advertisement click event. In source=0, 0 may indicate that the area of the button "Open details page or third-party application" is clicked.

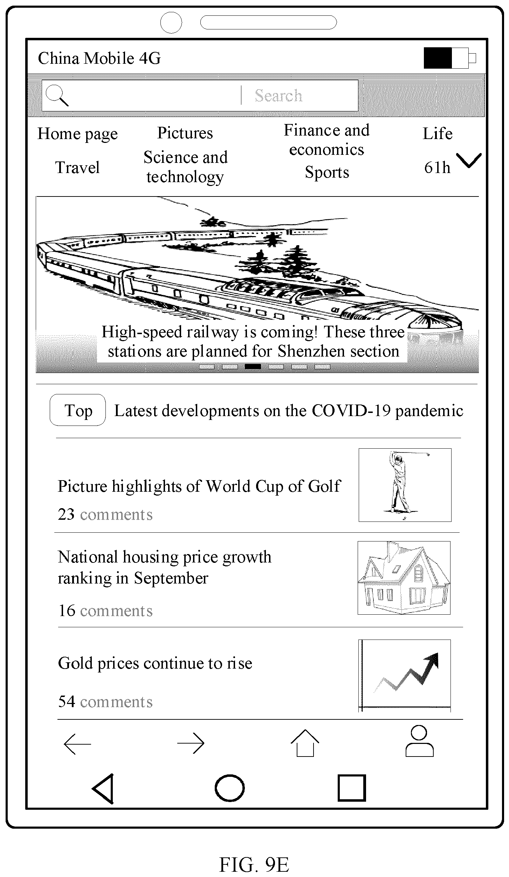

In some embodiments, as shown in FIG. 9D and FIG. 9E, the area C is a skip area. When the user clicks the area, the terminal device may skip the advertisement, and the user does not see the advertisement subsequently. As shown in FIG. 9E, after the user clicks the skip area, the application directly displays home page content of the application. For example, in this case, the click information sent by the terminal device to the server is as follows: https://example/contserver/tracker/action?ch=200001&etype=skip &pfsa=pY0N3O53EBde9...BheOXYG4&source=2. Specifically, in source=2, 2 may indicate that an area of a button "Skip" is clicked. In some embodiments, in this case, the click information sent by the terminal device to the server is as follows: https://example/contserver/tracker/action?ch=200001&etype=skip &pfsa=pY0N3O53EBde9.BheOXYG4. When the event is a skip event, a source field may not be carried.

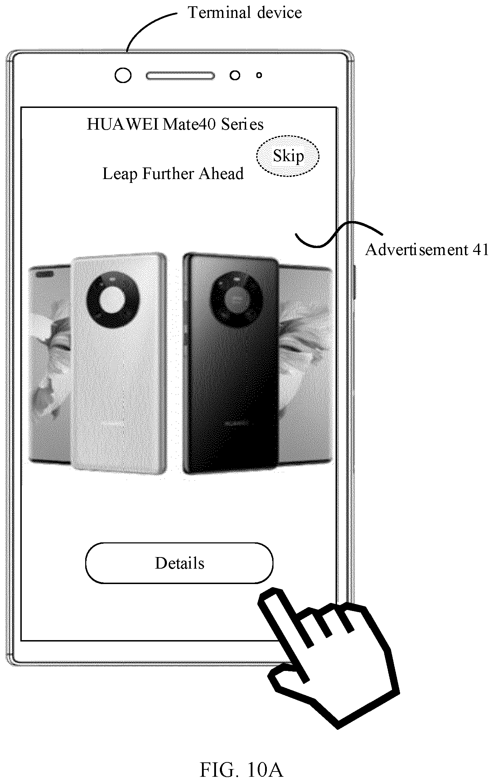

In some embodiments, as shown in FIG. 10A, the area B is an area other than the area A or the area C in the advertisement material area. For example, the area may be an area other than the area of the button "Open details page or third-party application" and the area of the button " Skip". When the user clicks the area, the advertisement is not redirected to the landing page link corresponding to the advertisement material. This case indicates that the user may want to further see more content corresponding to the advertisement material, but no redirection occurs because there is no link in the clicked area. Specifically, for example, in this case, the click information sent by the terminal device to the server is as follows: https://example/contserver/tracker/action?ch=200001&etype=click &pfsa=pY0N3O53EBde9...BheOXYG4&source=1, where etype=click indicates that the current event is an advertisement click event, and 1 may indicate that the area of the button "Open details page or third-party application" is clicked.

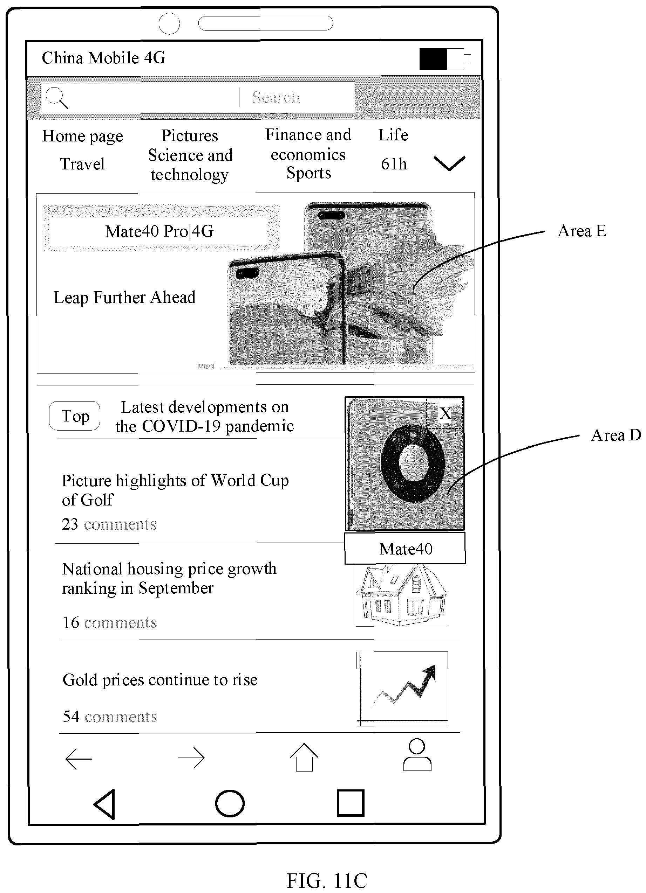

In some other embodiments, information about the click position may further include an area D, for example, further include an area of a floating icon shown in FIG. 11C. After the user clicks the floating icon, an advertisement landing page corresponding to the floating icon may be redirected to. Specifically, for example, in this case, the click information sent by the terminal device to the server is as follows: https://example/contserver/tracker/action?ch=200001&etype=click &pfsa=pY0N3O53EBde9...BheOXYG4&source=3, where etype=click indicates that the current event is an advertisement click event, and 3 may indicate that the area of the floating icon is clicked.

In some other embodiments, the information about the click position may further include an area E, for example, may include a position area of a non-splash (in-feed) advertisement shown in FIG. 11C. For example, in this case, the click information sent by the terminal device to the server is as follows: https://example/contserver/tracker/action?ch=200001&etype=click &pfsa=pY0N3O53EBde9...BheOXYG4&source=4, where etype=click indicates that the current event is an advertisement click event, and 4 may indicate that the non-splash (in-feed) advertisement is clicked.

In some embodiments, a specific click position may be any area range preset by a developer, for example, a surrounding area of the area of the button "Open details page or third-party application", or another area in an interface. In addition, a size, a position, and a shape of the area may be specifically set by the developer according to a specific advertisement display requirement. A specific area setting method is not limited in this application.

In some embodiments, the terminal device may determine a specific area or control clicked by the user. Specifically, when the user clicks a screen of the terminal device, the terminal device records position coordinates obtained when the user clicks the screen. In addition, the terminal device obtains a control layout area in a current interface and position coordinates of each control. The terminal device determines, based on the position coordinates obtained when the user clicks the screen and the position coordinates of each control, an area to which a current click position of the user belongs. In some embodiments, for example, the terminal device may determine, based on a click position of the user and a specific area of a control button "Skip" or a control button "Details", whether the user clicks the button "Skip" or the button "Details".

In some embodiments, when the user clicks a specific area of an advertisement, the advertisement SDK records information about the specific click area of the advertisement for ease of subsequent advertisement display.

For example, a global splash advertisement class may be defined in the following manner. Information about a click preset area (an area other than the area of the button " Open details page or third-party application" and the area of the button " Skip") of an advertisement is recorded by using the advertisement class.

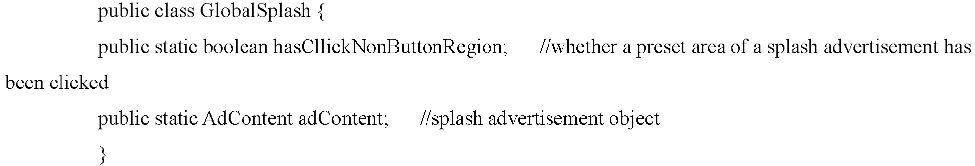

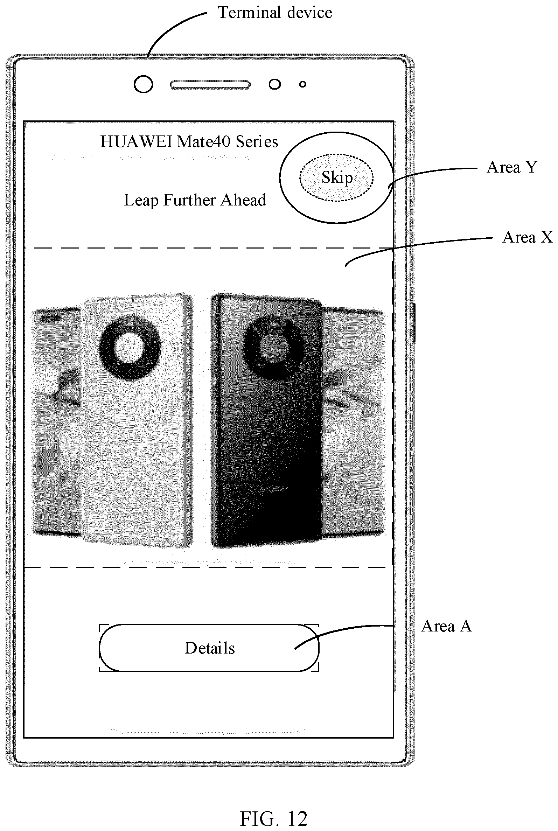

The parameter CllickNonButtonRegion may record whether the splash advertisement has been clicked in the preset area, and AdContent may record information about a specifically clicked advertisement, for example, may include an advertisement slot identifier " slotid" : " a09itw7hsf', an advertisement ID "adid": " 1", an advertisement link "url"=http://cs.op.hicloud.com/contserver/data/98BE13F2CD19D41.jpg, and the like, so as to identify the specific advertisement that has been clicked in the preset area. In some other embodiments, according to an actual requirement, click information of a plurality of areas of the advertisement clicked by the user may be recorded, so that advertisement information corresponding to a specific area may be displayed subsequently based on the area clicked by the user. As shown in FIG. 12, for example, if the user clicks a surrounding area X of "Open details page or third-party application", it indicates that the user may also want to see specific content of the current advertisement 41. An advertisement 42 corresponding to the current advertisement 41 is displayed subsequently. If the user clicks another area Y, it indicates that the user may be uninterested in the advertisement 41. In this case, the advertisement 42 is not displayed subsequently, a new advertisement is requested from the server, and new advertisement content is displayed. A developer can set a position of a click area and a size of the area according to an actual requirement. This is not specifically limited herein.

**S320: The server records the click information of the splash advertisement 41.**

The server calculates a quantity of advertisement clicks based on the returned click information, and may calculate the advertisement fee based on the quantity of advertisement clicks. Specifically, the server calculates and charges for the exposure of the advertisement based on the advertisement ID (the encrypted string information) in the display information, the advertisement charging rule used when the advertisement is requested, and an advertisement click event of the terminal device.

In some embodiments, the server may modify a user interest-based advertisement based on the returned click information of the user. When the server subsequently selects the optimal advertisement or the backup advertisement, the server performs retrieval based on the information carried in the advertisement request, user preference modification in the server, and the advertisement delivery requirement on the server side. For example, if returned click information of the user for a specific advertisement includes a skip event, when subsequently selecting an advertisement, the server may no longer select an advertisement that is related to the specific advertisement or that is of a same type as the specific advertisement.

### Third phase: displaying an advertisement a second time

**As shown in** **FIG. 5A to FIG. 5C****, in S400, after display of the splash advertisement is completed, the user opens a content page of the app, and browses content in the app.**

**S400A: When the user browses to an advertisement slot on the content page, the terminal device is to display an advertisement in the advertisement slot, and the advertisement SDK determines whether the user has clicked the advertisement in the preset area.**

For example, the content page is defined to continue to display a control of the splash advertisement, an advertisement is displayed in the foregoing advertisement slot by using the control:

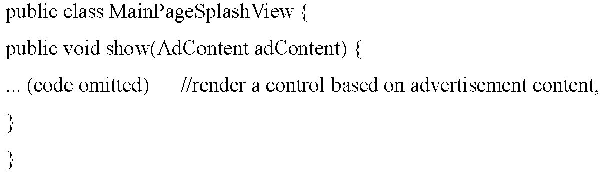

Logic for determining, after a home page is opened, whether to continue to display splash material content is as follows:

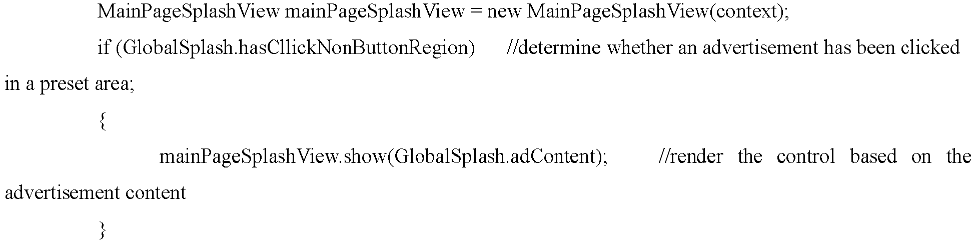

It can be learned from the foregoing example that, when the user has clicked the advertisement in the preset area, the click is recorded in the parameter CllickNonButtonRegion. When the content page is to display an advertisement, the parameter CllickNonButtonRegion is obtained, and whether the user has clicked the advertisement in the preset area is determined based on the parameter. According to a correspondence between CllickNonButtonRegion and AdContent, for example, the advertisement ID is obtained based on AdContent or a link corresponding to the advertisement is directly obtained based on a link in AdContent, the advertisement that has been clicked in the preset area is obtained (for example, by using the advertisement ID).

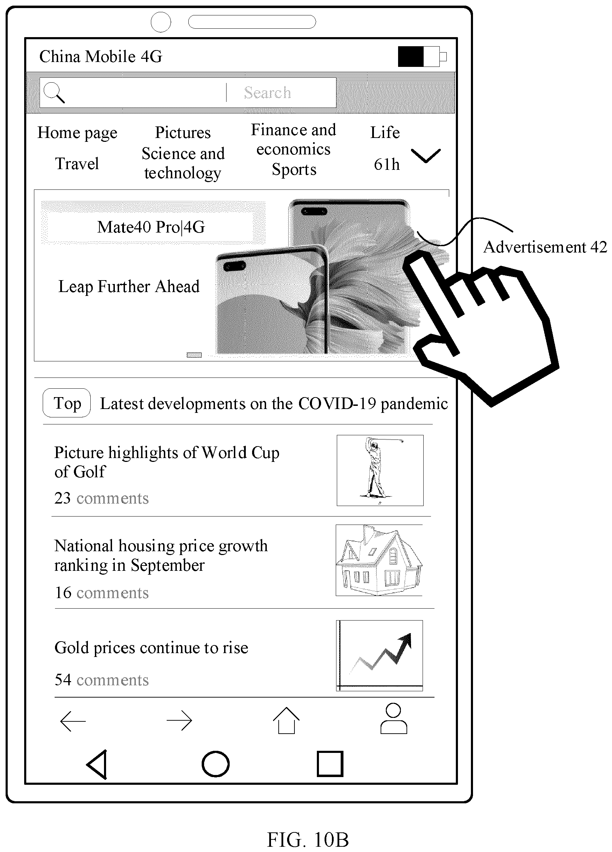

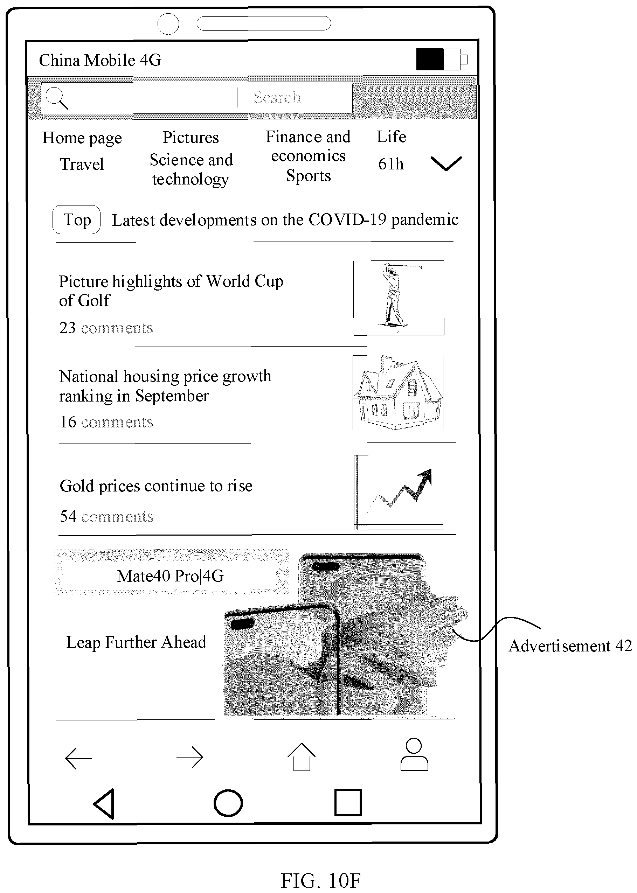

In some embodiments, for example, in an embodiment shown in FIG. 10B, there is an advertisement slot on a home page of the content page of the app. When the user opens a home page of the app, the advertisement SDK is triggered to determine whether the user has clicked the advertisement in the preset area. In an embodiment shown in FIG. 10F, there is no advertisement slot on the home page of the content page of the app. In an embodiment shown in FIG. 10F, when the user browses to an advertisement slot on the content page, the advertisement SDK determines whether the user has clicked the advertisement in the preset area. When the content page browsed by the user has no advertisement slot, the advertisement SDK does not need to perform determining in this case because the current page has no advertisement slot.

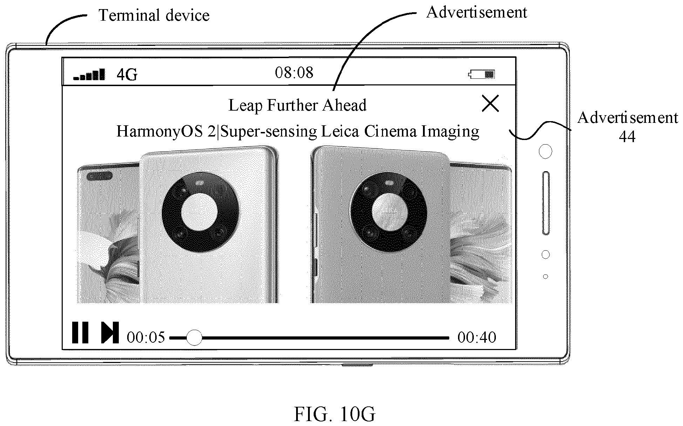

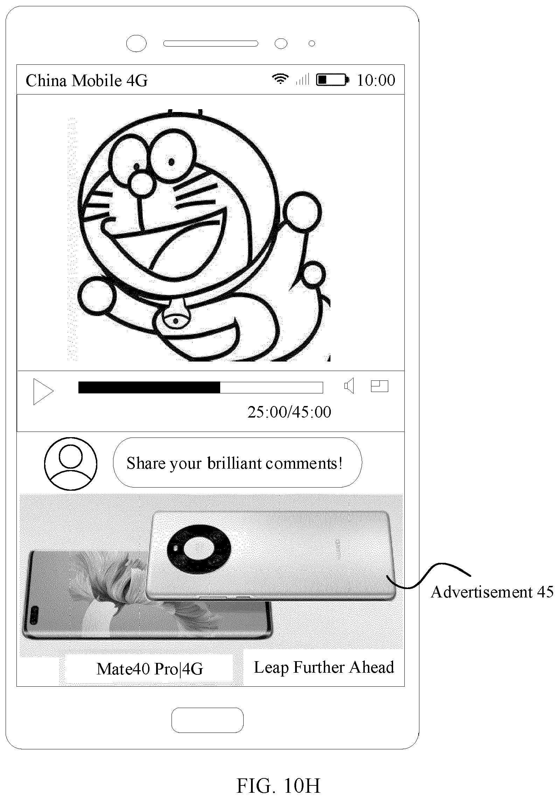

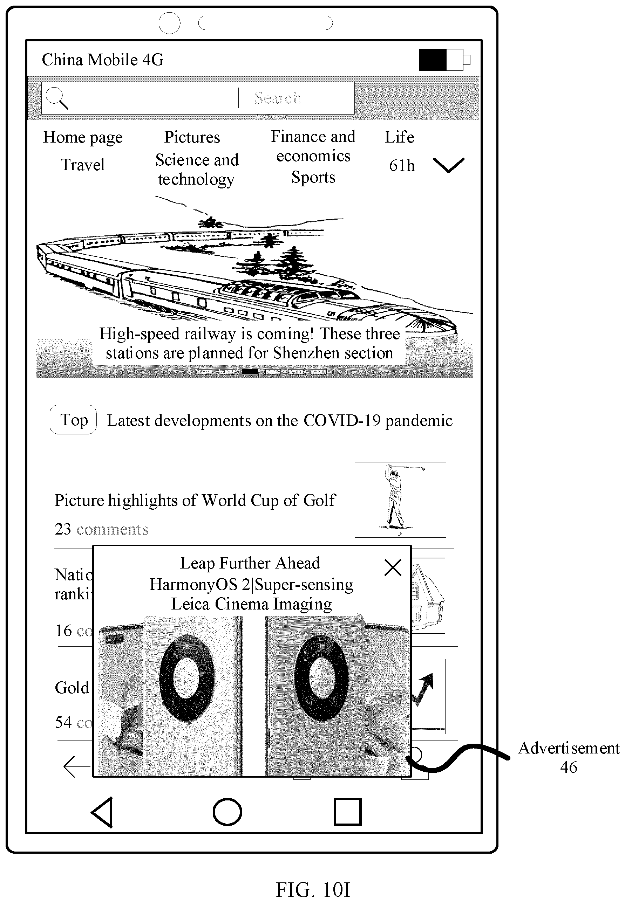

In some embodiments, the advertisement slot in the app may be an advertisement slot at a position of the home page of the content page when the user opens the home page of the app, as shown in FIG. 10B; or may be an advertisement slot that appears when the user browses the content page of the app and slides down the page, as shown in FIG. 10F; or may be an advertisement slot that is used to display an advertisement on a video image when the user plays a video, for example, when the video starts or pauses, as shown in FIG. 10G; or may be an advertisement slot below a video play area in a video play interface, as shown in FIG. 10H; or may be an interstitial advertisement slot popped up when the user switches a display interface, as shown in FIG. 10I. In the foregoing embodiments, for example, in embodiments in FIG. 10F to FIG. 10I, after receiving a splash advertisement request, the server sends, to the terminal device, advertisement materials of a plurality of sizes (for example, an advertisement material 44, an advertisement material 45, and an advertisement material 46) associated with same content. After receiving advertisement information, the terminal device downloads the advertisement materials of the plurality of sizes, so that the materials may be used for subsequent display of advertisements in different advertisement slots.

**S410: If the user has clicked the advertisement 41 in the preset area, obtain an advertisement material 42 related to the advertisement 41, and render the advertisement material 42 in the advertisement slot on the content page by using the advertisement SDK.** In this case, when the user clicks the preset area, it indicates that the user may want to see more content corresponding to the advertisement material.

In some embodiments, the preset area may be an area that is set in advance, or may be the area other than the area of the button "Open details page or third-party application" and the area of the button " Skip" described above.

Specifically, the terminal device obtains an ID (" adid" : 1) of an advertisement to be displayed in a current advertisement slot, obtains a size of the current advertisement slot (for example, an advertisement slot height "height": 720 and an advertisement slot width "width": 1080), obtains the corresponding advertisement material 42 based on the ID of the advertisement and the size of the advertisement slot, and displays the advertisement material 42. As shown in FIG. 10B, the terminal device displays, in the advertisement slot on the browser content page, the advertisement material 42 corresponding to the size of the advertisement slot. The advertisement material 42 and the advertisement material 41 are associated, and are used to display a same advertised product. In some embodiments, a picture, an animation, or video content corresponding to the advertisement material 42 may be displayed in the advertisement slot on the content page of the app.

In this embodiment, the terminal device determines a requirement and an intention of the user for an advertisement based on stored splash advertisement data and display and click data of the user. An advertisement that the user is interested in may be re-displayed in a process of using the app by the user, and there is no need to re-display a same splash advertisement when the user opens the app next time (actually, in many cases, the user may open the app only once in a period of time, and therefore the splash advertisement has only one display opportunity in this period of time). According to embodiments of this application, a click intention of the user can be extended, to improve an effective click rate and conversion rate of the advertisement.

**S420: When the user clicks the advertisement material 42, the terminal device is redirected to an advertisement landing page corresponding to the advertisement material 42.**

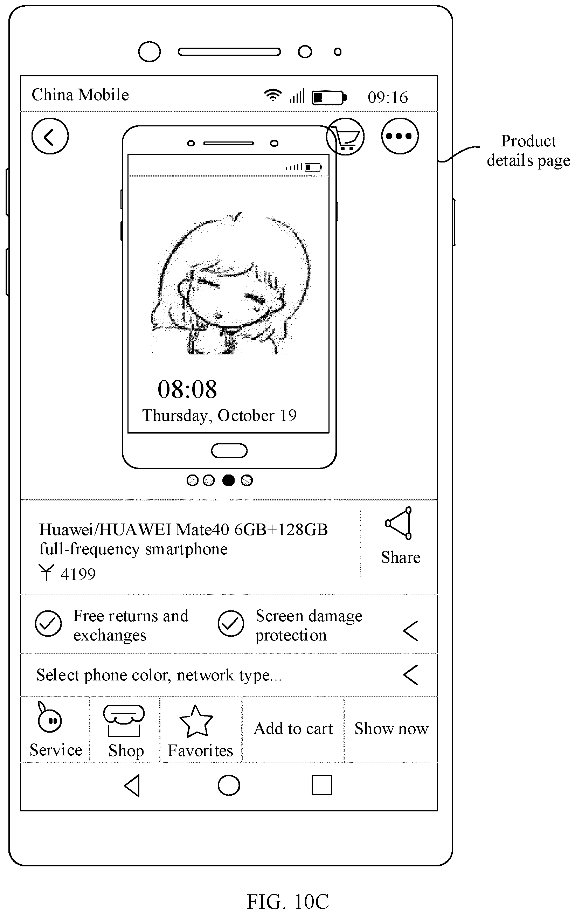

In some embodiments, advertisement landing pages corresponding to the advertisement material 42 and the advertisement material 41 may be the same. As shown in FIG. 10C, when the user clicks the advertisement material 42, a details page of Mate 40 may be redirected to, and a landing page address is "clickUrl": "http://xxxx.mate40.com" in the returned information of the advertisement.

In some other embodiments, the advertisement landing pages corresponding to the advertisement material 42 and the advertisement material 41 may be different. The advertisement landing pages corresponding to the advertisement material 42 and the advertisement material 41 are determined by the server based on a requirement of the advertiser during advertisement delivery, and are sent by the server to the terminal device by using returned information of an advertisement.

S430 and S440: **After the user clicks the advertisement material 42, the terminal device sends click information of the advertisement material 42 to the server, and the server records the click information of the advertisement material 42.**

In some embodiments, the click information of the advertisement material 42 sent by the terminal device to the server is similar to the click information in step S310. Details are not described herein again.

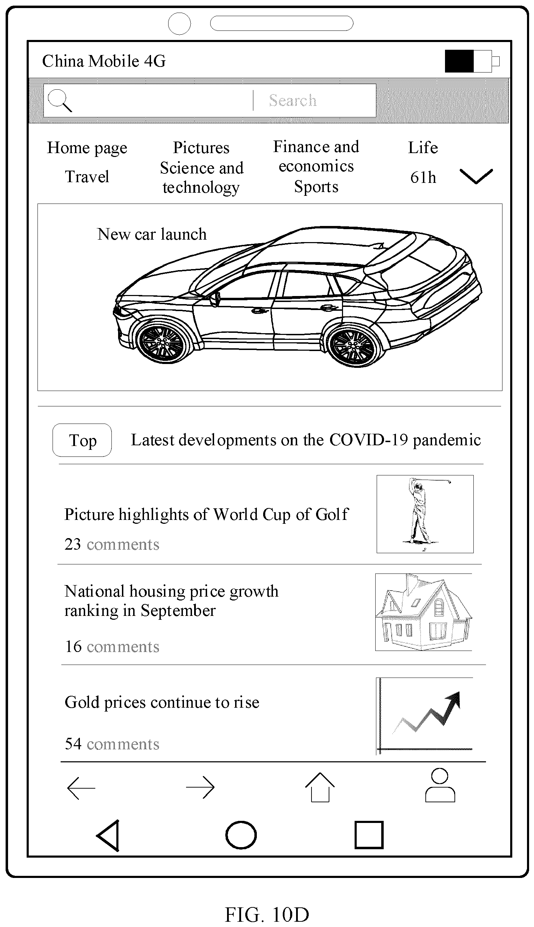

S450 to S480: **The user does not click the advertisement 41 in the preset area.** In this case, when the user does not click the preset area, it indicates that the user is uninterested in the content displayed in the splash advertisement. The terminal device sends a second advertisement request to the server, where the second advertisement request is used to request advertisement content to be displayed in the advertisement slot on the content page. The server sends second advertisement information to the terminal device based on the advertisement request, and returns a new advertisement material (a car advertisement B). After receiving the second advertisement information, the terminal device displays the advertisement material (the car advertisement B) in the advertisement slot on the content page, as shown in FIG. 10D.

Content of the second advertisement request is similar to content of the first advertisement request, and includes an advertisement slot ID (slotid), an advertisement slot width (width), an advertisement slot height (height), device information of the terminal device 11, an application package name (pkgname) of an application, a version of the application, a requested advertisement type (adtype), and the like. The second advertisement information is similar to the first advertisement information, and may include parameters such as an advertisement slot ID (slotid), an advertisement creative type (creativetype), a material ID (contentid) of an advertisement material, a download link (html) of the advertisement material, a deeplink address, a digest value (sh4256) of the advertisement material, and an advertisement interaction type (interactiontype) that are corresponding to the advertisement request. The terminal device downloads the new advertisement material from the download link of the advertisement material in the advertisement information, and performs rendering.

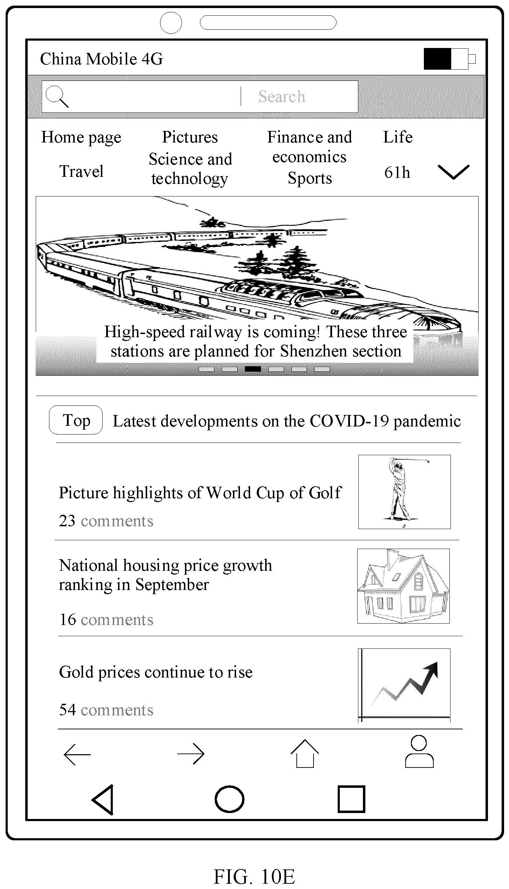

In some embodiments, if the user does not click the advertisement 41 in the preset area, the terminal device may not send an advertisement request to the server, and directly displays page content in the advertisement slot on the content page without displaying advertisement content, as shown in FIG. 10E, so as to improve a speed of displaying a home page of the app.

### Embodiment 2

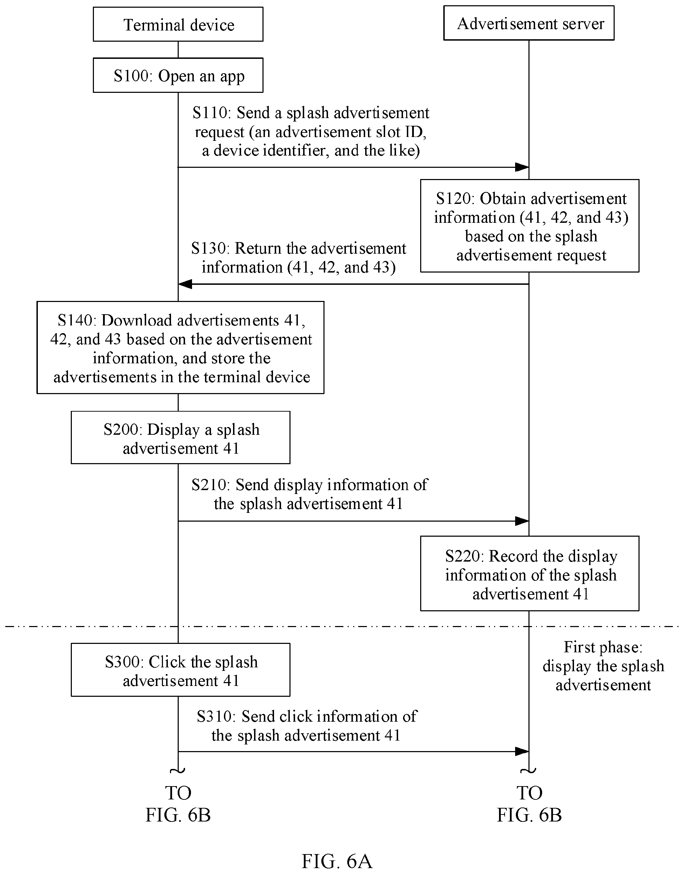

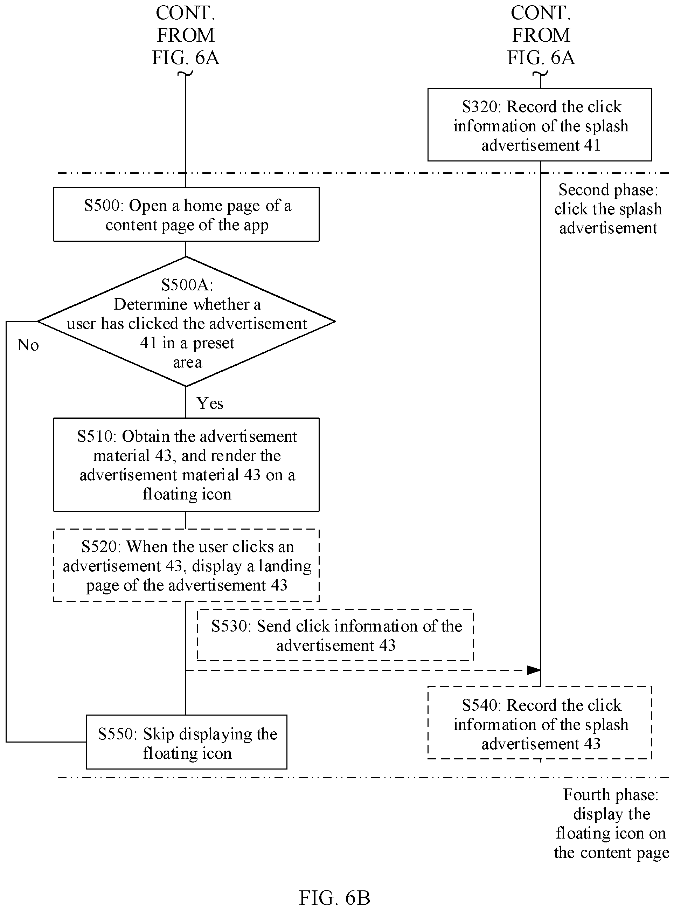

In this embodiment, as shown in FIG. 6A and FIG. 6B, a first phase of displaying a splash advertisement and a second phase of clicking the splash advertisement are included. Specific implementations of the first phase and the second phase are similar to those in Embodiment 1, and reference may be made to related descriptions in Embodiment 1. Details are not described herein again.

**S500: After display of the splash advertisement is completed, the user opens a content page of the app, and browses content in the app.**

**S500A: When the user opens the content page of the app, the advertisement SDK determines whether the user has clicked the advertisement in the preset area.**

In this embodiment, because an advertisement material 43 to be displayed subsequently is displayed above the content page of the app by using a floating icon, when the user opens the content page of the app (this is different from Embodiment 1, and Embodiment 1 is "when the user browses to an advertisement slot on the content page"), the SDK is triggered to determine whether the advertisement has been clicked in the preset area. If the advertisement has been clicked in the preset area, the advertisement material 43 is to be displayed by using the floating icon.

**S510: If the user has clicked the advertisement 41 in the preset area, obtain the advertisement material 43 related to the advertisement 41, and render the advertisement material 43 on the content page by using the advertisement SDK.**

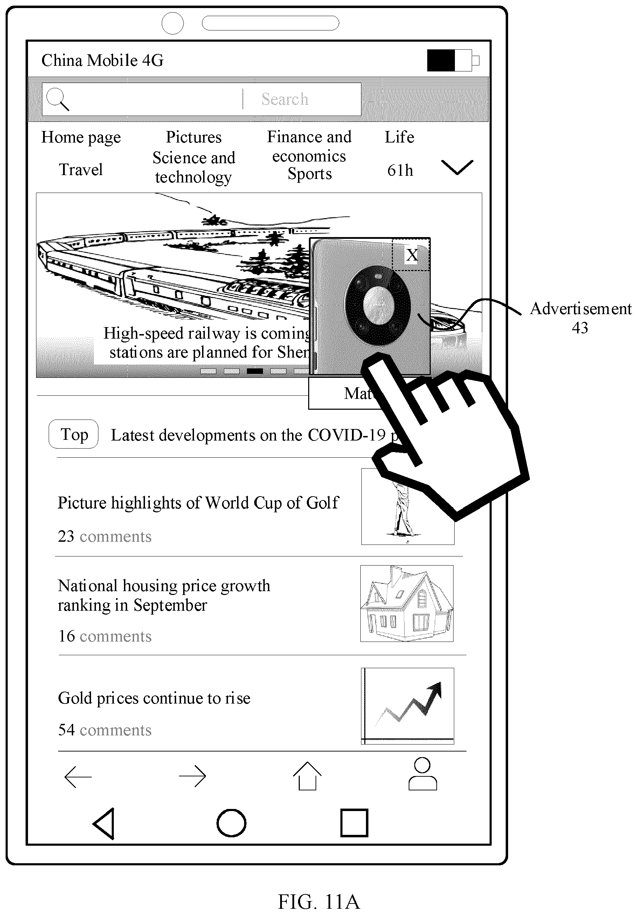

Specifically, the terminal device obtains an ID ("adid" : 1) of an advertisement to be displayed by using the floating icon, obtains a size of an advertisement slot of the floating icon (for example, an advertisement slot height "height": 64, and an advertisement slot width "width": 64), obtains the corresponding advertisement material 43 based on the ID of the advertisement and the size of the advertisement slot, and displays the advertisement material 43 by using the floating icon. As shown in FIG. 11A, after the user opens the app, the advertisement material 43 corresponding to the floating icon is displayed on a home page of the content page of the app. The advertisement material 43 and the advertisement material 41 are associated, and are used to display a same advertised product.

The content page is defined to continue to display a control of the splash advertisement, an advertisement is displayed on the floating icon by using the control:

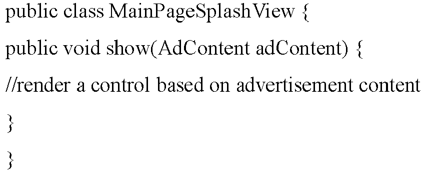

In some embodiments, the floating icon may be moved on the content page of the app. Alternatively, in some embodiments, a size of the floating icon may change on the content page of the app. Alternatively, a picture, an animation, or video content corresponding to the advertisement material 43 may be displayed on the floating icon on the content page of the app.

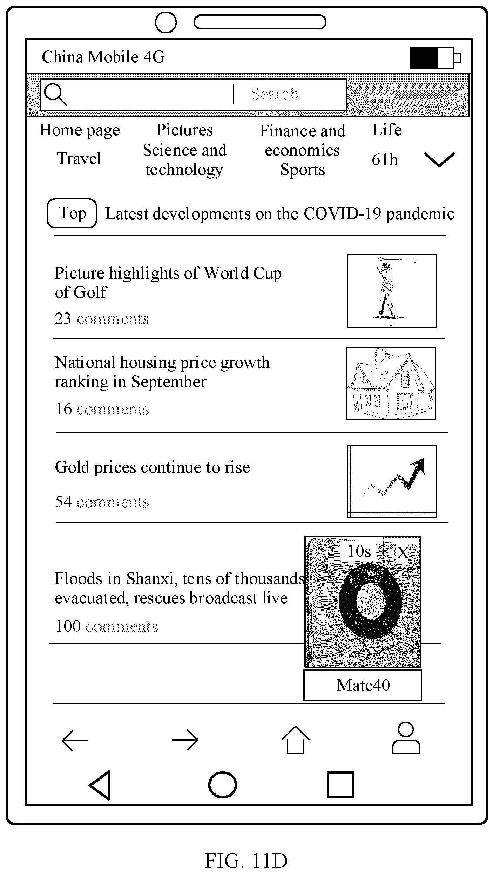

In some embodiments, the floating icon is not displayed after being displayed on the content page for preset duration, and countdown may be displayed on the floating icon, as shown in FIG. 11D. In some embodiments, when the user browses home page content, the floating icon is always displayed on a home page of the app. When the user slides down the home page content, the floating icon is continuously displayed on the home page, as shown in FIG. 11D. In some cases, a position of the floating icon changes with a gesture of the user. In some other embodiments, when an operation performed by the user on a current interface is detected, the floating icon is no longer displayed. For example, when the user slides down the home page content, the floating icon is no longer displayed in a current interface, or when the user clicks a link and redirection occurs in the current interface, the floating icon is no longer displayed in an interface obtained after the redirection.

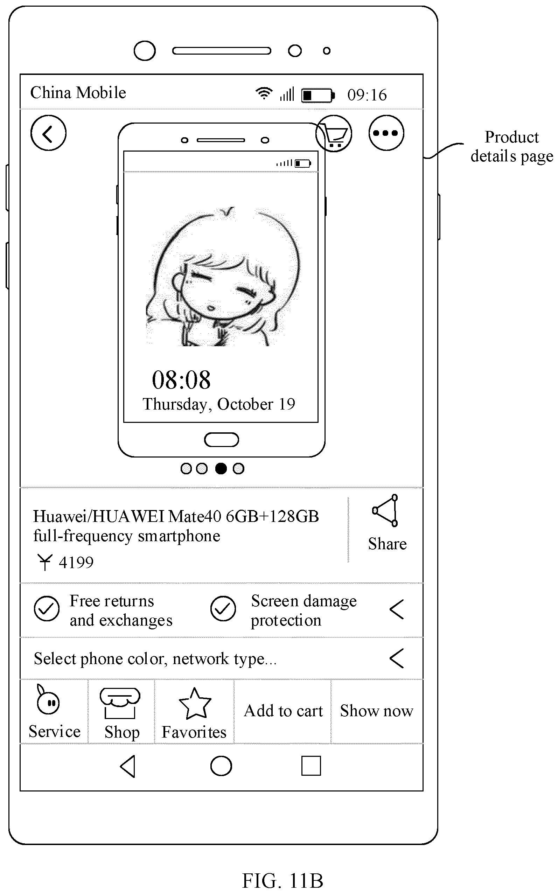

**S530 and S540: After the user clicks the advertisement material 43, the terminal device is redirected to an advertisement landing page corresponding to the advertisement material 43, as shown in** **FIG. 11B****, the terminal device sends click information of the advertisement material 43 to the server, and the server records the click information of the advertisement material 43.**

In some embodiments, the click information of the advertisement material 43 sent by the terminal device to the server is similar to the click information in steps S430 and S440. Details are not described herein again.

**S550: If the user has clicked the advertisement 41 in the preset area, display a home page of the content page of the app, and skip displaying the floating icon.**

In addition, in Embodiment 2, in some implementations, as shown in FIG. 11C, when the user browses to an advertisement slot on the content page, the terminal device may perform steps S400 to S490. To be specific, in the app, the advertisement material 42 may be displayed in the advertisement slot on the content page when the floating icon is displayed on the content page.

### Embodiment 3

In this embodiment, as shown in FIG. 6A and FIG. 6B, a first phase of displaying a splash advertisement and a second phase of clicking the splash advertisement are included. Specific implementations of the first phase and the second phase are similar to those in Embodiment 1, and reference may be made to related descriptions in Embodiment 1. Details are not described herein again.

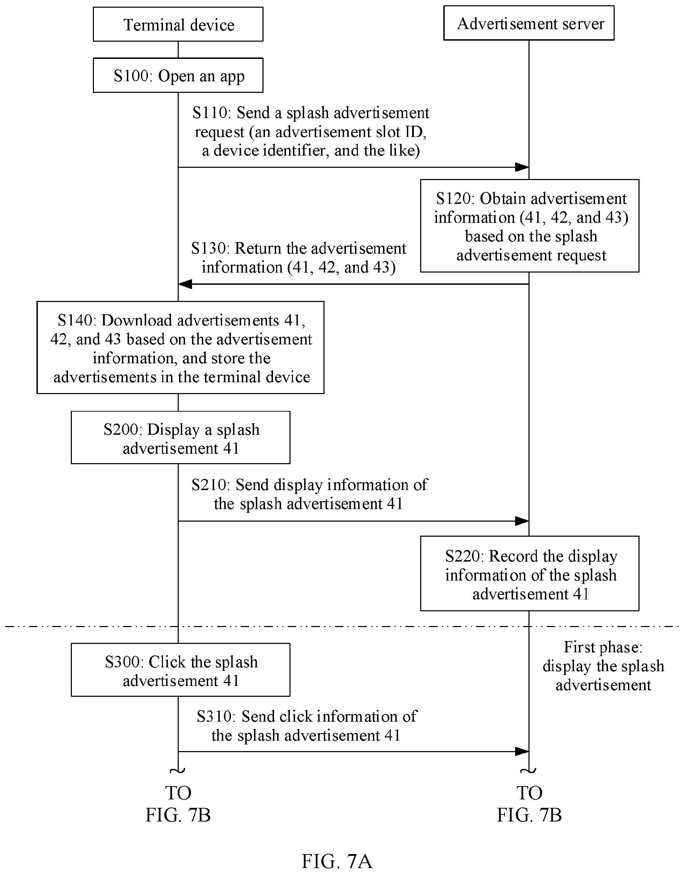

**As shown in** **FIG. 7A** **and** **FIG. 7B****, in S600, after display of the splash advertisement is completed, the user opens a content page of the app, and browses content in the app.**

**S600A: When the user opens the content page of the app, the advertisement SDK determines whether the user has clicked a skip area or a details viewing area.**

In this embodiment, because an advertisement material 43 to be displayed subsequently is displayed above the content page of the app by using a floating icon, when the user opens the content page of the app (this is different from Embodiment 1, and Embodiment 1 is "when the user browses to an advertisement slot on the content page"), the SDK is triggered to determine whether the skip area or the details viewing area has been clicked. Specifically, if the user has clicked the skip area, it indicates that the user is uninterested in the advertisement, and there is no need to display the advertisement subsequently. Alternatively, if the user has clicked the details viewing area, it indicates that the user has viewed a landing page of the advertisement through the splash advertisement, and there is no need to display the advertisement subsequently. Therefore, if it is determined that the user does not click the skip area and does not click the details viewing area, the user may want to see the advertisement subsequently. In this case, the advertisement material 43 may be displayed by using the floating icon, so that advertisement content of the splash advertisement can be continuously displayed.

**S610: If the user does not click the skip area and does not click the details viewing area, obtain the advertisement material 43 related to the advertisement 41, and render the advertisement material 43 on the content page by using the advertisement SDK.**

An advertisement class records information about whether a skip area or a details viewing area of an advertisement has been clicked.

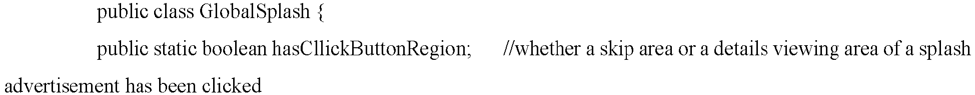

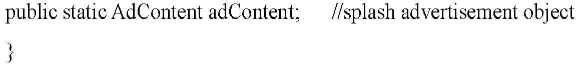

Logic for determining, after a home page is opened, whether to continue to display splash material content is as follows:

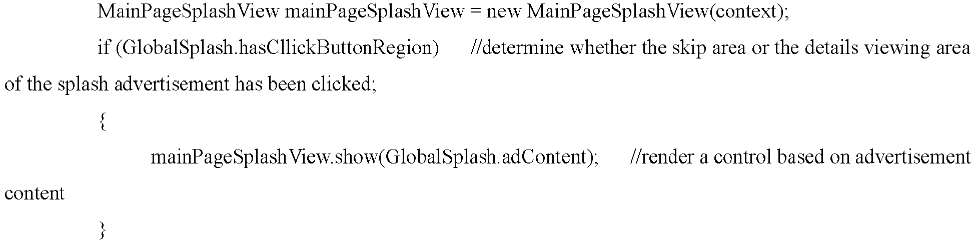

It can be learned from the foregoing example that when the user has clicked the skip area or the details viewing area of the splash advertisement, the click is recorded in the parameter CllickButtonRegion (for example, if the user has clicked the skip area of the splash advertisement, the parameter CllickButton is set to 1, or if the user does not click the skip area of the splash advertisement and does not click the details viewing area, the parameter CllickButton is set to 0). When the content page is to display an advertisement, the parameter CllickButtonRegion is obtained, and whether the advertisement material 43 related to the advertisement 41 is to be obtained is determined based on the parameter. For example, when the parameter CllickButton is set to 0, it indicates that the user does not click the skip area and does not click the details viewing area, and the advertisement material 43 related to the advertisement 41 is obtained. When the parameter CllickButton is set to 1, it indicates that the user has clicked the skip area or the details viewing area, and there is no need to display an advertisement subsequently.

**S620 to S640 are similar to S520 to S540. For specific steps, refer to the process of the foregoing embodiment. Details are not described herein again.**

**S620 and S630:** if the user has clicked the skip area or the details viewing area, display a home page of the content page of the app, and skip displaying the floating icon.

In some embodiments, the click information of the advertisement material 43 sent by the terminal device to the server is similar to the click information in steps S430 and S440. Details are not described herein again.

In some other embodiments, the step of the advertisement SDK determining whether the user has clicked the advertisement in the preset area in Embodiment 1 may be determined by using the step of determining whether the user has clicked the skip area or the details viewing area in Embodiment 4. If it is determined that the user has clicked the skip area or the details viewing area, the user continues to perform steps S450 to 5480. If it is determined that the user does not click the skip area and does not click the details viewing area, the user continues to perform steps S410 to S440.

**The user continues to perform steps S410 to S440.**

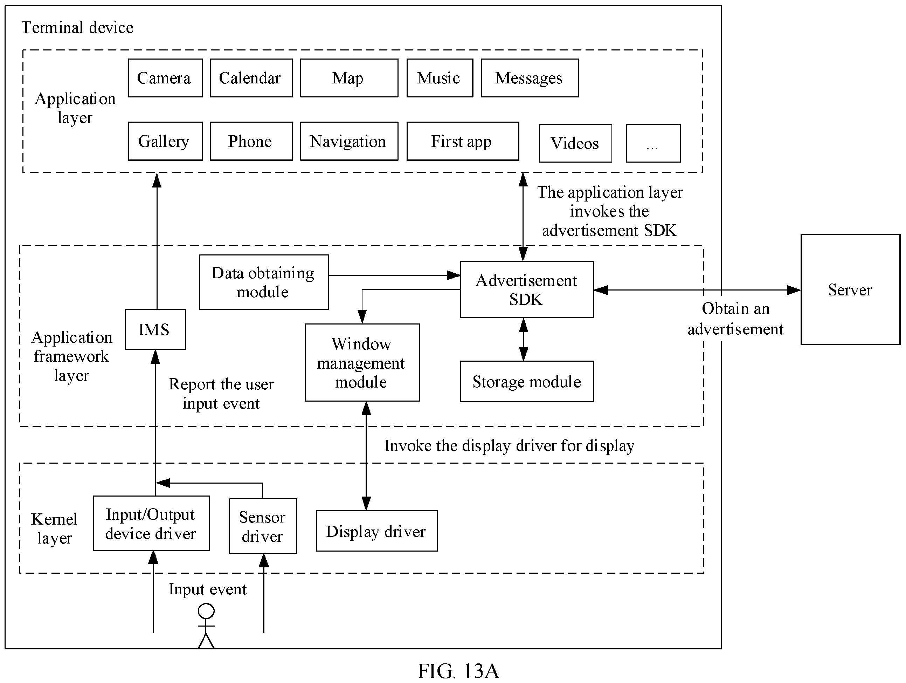

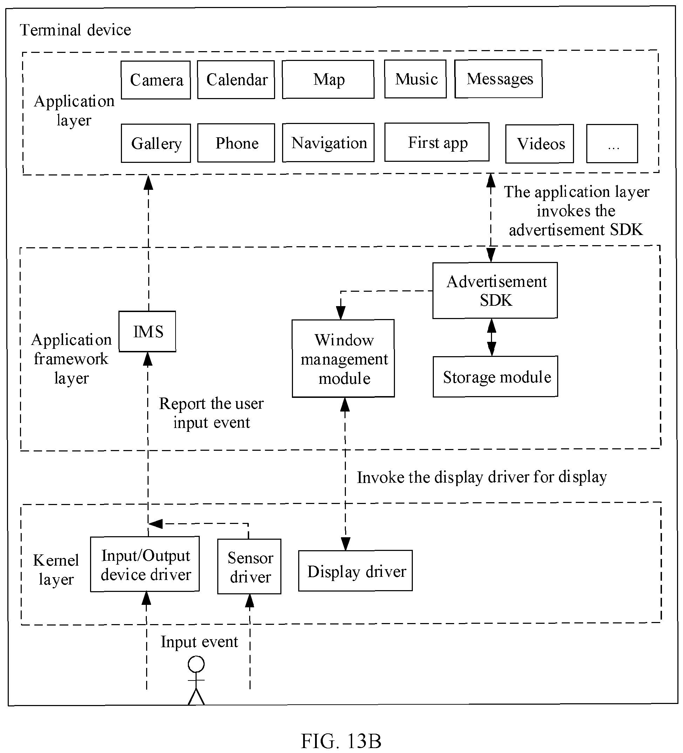

**FIG. 13A** **and** **FIG. 13B** **are schematic diagrams of information exchange when a terminal device requests an advertisement from a server according to an embodiment of this application by using a layered architecture operating system of an Android system or a HarmonyOS system as an example. A specific architecture of the terminal device is not limited in this application. For a specific description of a software system of another architecture, refer to a conventional technology.**

An application layer may include a series of application packages, for example, applications such as Camera, Gallery, Calendar, Phone, Map, Navigation, WLAN, Bluetooth, Music, Videos, Messages, and a desktop launcher (Launcher). For ease of description, an application may be briefly described as an app below. An app on a first device may be a native app (for example, an app installed on the first device when an operating system is installed on the first device before the first device is delivered from a factory), or may be a third-party app (for example, an app downloaded and installed by a user by using an application store). This is not limited in embodiments of this application.

An application framework layer provides an application programming interface (application programming interface, API) and a programming framework for an app at the application layer. As shown in FIG. 5A to FIG. 5C, the application framework layer may include a window manager service (window manager service, WMS), an input manager service (input manager service, IMS), an advertisement SDK, a storage module, and a data obtaining module. For specific functions of the advertisement SDK, the storage module, and the data obtaining module, refer to the foregoing descriptions. Details are not described herein again. The application framework layer further includes a functional function that needs to be invoked by FWK and that is included in the Android system or the HarmonyOS system when the Android system or the HarmonyOS system is running, an Android core library, and an Android virtual machine. A system library may include a plurality of functional modules, for example, a browser kernel, three-dimensional (3 dimensional, 3D) graphics, and a font library. The system library may include a plurality of functional modules, for example, a surface manager (surface manager), a media library (Media Library), a three-dimensional graphics processing library (for example, OpenGL ES), and a 2D graphics engine (for example, SGL).

A kernel layer is a layer between hardware and software. The kernel layer may include a display driver, an input/output device driver (for example, a keyboard, a touchscreen, a headset, a speaker, or a microphone), a device node, a camera driver, an audio driver, a sensor driver, and the like. The user performs an input operation by using an input device. The kernel layer may generate a corresponding original input event based on the input operation, and store the original input event in the device node. The input/output device driver may detect an input event of the user, for example, an operation of starting an app by the user.

The IMS may be used to perform processing such as translation and encapsulation on an original input event, to obtain an input event including more information, and send the input event to the WMS. The WMS stores a clickable area (for example, a control) of each app, position information of a focus window, and the like. Therefore, the WMS may correctly distribute the input event to a specified control or focus window. The WMS carries data and attributes related to an "interface", and is used to manage a status related to the "interface", for example, used to manage a window program and event dispatch. Managing a window program means sequentially outputting a display request of an app to a physical screen or another display device with assistance of an application server and a WMS.

FIG. 13A is a diagram of internal information exchange of the terminal device in a process in which the terminal device requests the advertisement from the server (that is, in a first phase of displaying a splash advertisement) according to the foregoing embodiment. First, the input/output device driver or the sensor driver of the terminal device may detect an input event of the user. For example, the input event may be an input event in which the user clicks a button in an interface to open a next-level interface of the interface, or the user performs input by using a voice or a custom gesture, or may be another sensed input event, or the like. The input/output device driver or the sensor driver of the terminal device reports the input event of the user to the IMS, and the IMS distributes the input event to a corresponding app. The app invokes the advertisement SDK, and the advertisement SDK obtains a user behavior data parameter and/or a parameter of the terminal device by using the data obtaining module. The advertisement SDK sends an advertisement request to the server, obtains corresponding advertisement-related information (for example, an advertisement material 41, an advertisement material 42, and an advertisement material 43), and stores the advertisement materials in a storage unit. After the advertisement materials are obtained, the advertisement SDK invokes a WMS interface, and the WMS re-invokes the display driver, to display the advertisement material 41 in the terminal device.

FIG. 13B is a diagram of internal interaction of displaying an advertisement in an advertisement slot on a content page of the app or displaying an advertisement on the content page of the app by using a floating icon after the terminal device opens a content interface of the app according to the foregoing embodiment. Similarly, first, the input/output device driver or the sensor driver of the terminal device may detect an input event of the user. The input/output device driver or the sensor driver of the terminal device reports the input event of the user to the IMS, and the IMS distributes the input event to a corresponding app. After sensing the input event, the app determines an advertisement slot for subsequent display, or determines that an advertisement is to be displayed subsequently by using a floating icon. The app invokes the advertisement SDK. The advertisement SDK determines whether the user has clicked the advertisement in a preset area, and invokes the advertisement material 42 or the advertisement material 43 stored in the storage unit. After the advertisement material 42 or the advertisement material 43 is obtained, the advertisement SDK invokes the WMS interface, and the WMS re-invokes the display driver, to display the advertisement in the terminal device. In this process, when displaying the advertisement material 42 or the advertisement material 43, the app may directly obtain the advertisement material 42 or the advertisement material 43 stored in the storage unit, and does not need to request from the server again. This improves an exposure rate of the advertisement, and increases a speed of displaying the advertisement.

It should be further understood that parameter code in the foregoing embodiments is merely an example, and shall not be construed as any limitation on a parameter code format carried in the information in embodiments of this application. In some other embodiments of this application, the parameter code format carried in the information in embodiments of this application may alternatively be another format or the like. This is not limited in embodiments of this application.

It should be further understood that division into the manners, cases, categories, and embodiments in embodiments of this application is merely intended for ease of description, and shall not constitute a particular limitation. The features in the manners, categories, cases, and embodiments may be combined without contradiction.

It should be further understood that the numerals used in embodiments of this application are differentiated merely for ease of description, but are not used to limit the scope of embodiments of this application. The sequence numbers of the foregoing processes do not mean execution sequences. The execution sequences of the processes should be determined based on functions and internal logic of the processes, and shall not be construed as any limitation on the implementation processes of embodiments of this application.

It should be further understood that the foregoing descriptions of embodiments of this application emphasize differences between embodiments. For same or similar parts that are not mentioned, refer to each other. For brevity, details are not described herein again.

It should be further understood that, in embodiments of this application, "predefinition" may be implemented by pre-storing corresponding code, a table, or another manner that may indicate related information in a device. A specific implementation is not limited in this application.

The communication apparatus, the computer-readable storage medium, the computer program product, or the chip provided in embodiments is configured to perform the corresponding method provided above. Therefore, for beneficial effects that can be achieved by the communication apparatus, the computer-readable storage medium, the computer program product, or the chip, refer to the beneficial effects of the corresponding method provided above. Details are not described herein again.

In an optional manner, when software is used to implement data transmission, all or a part of the data transmission may be implemented in a form of a computer program product. The computer program product includes one or more computer instructions. When the computer program instructions are loaded and executed on a computer, all or some of the procedures or the functions in embodiments of this application are implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device integrating one or more usable media, for example, a server or a data center. The usable medium may be a magnetic medium (for example, a floppy disk, a hard disk, or a magnetic tape), an optical medium (for example, a digital video disk (digital video disk, DVD)), a semiconductor medium (for example, a solid-state disk (solid-state disk, SSD)), or the like.

It may be understood that the memory in embodiments of this application may be a volatile memory or a nonvolatile memory, or may include both a volatile memory and a nonvolatile memory. The nonvolatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and serves as an external cache. There are a plurality of different types of RAMs, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In this application, names may be assigned to various objects such as messages/information/devices/network elements/systems/apparatuses/actions/operations/procedures/concepts. It can be understood that the specific names do not constitute a limitation on the related objects. The assigned names may vary with factors such as scenarios, contexts, or usage habits. Understanding of technical meanings of technical terms in this application should be determined mainly based on functions and technical effects embodied/performed by the technical terms in the technical solutions.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

A person of ordinary skill in the art may be aware that, units and algorithm steps in the examples described with reference to embodiments disclosed in this specification may be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it shall not be considered that the implementation goes beyond the scope of this application. In other words, the electronic device is presented in a form of a functional module. "Module" may be an application-specific integrated circuit ASIC, a circuit, a processor that executes one or more software or firmware programs and a memory, an integrated logic circuit, and/or another component that can provide the foregoing functions.

All or some of the methods in embodiments of this application may be implemented by software, hardware, firmware, or any combination thereof. When the software is used to implement the methods, all or some of the methods may be implemented in a form of a computer program product. The computer program product includes one or more computer programs or instructions. When the computer programs or the instructions are loaded and executed on a computer, all or some of the procedures or the functions in embodiments of this application are performed. The computer may be a general-purpose computer, a dedicated computer, a computer network, or another programmable apparatus. The computer programs or the instructions may be stored in a computer-readable storage medium, or may be transmitted by using the computer-readable storage medium. The computer-readable storage medium may be any usable medium accessible by a computer, or a data storage device integrating one or more usable media such as a server

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to an actual requirement to achieve the objectives of the solutions of embodiments.

In addition, the functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or a part contributing to a conventional technology, or some of the technical solutions may be implemented in a form of a software product. The computer software product is stored in a readable storage medium, and includes several instructions for instructing a computer device (which may be a personal computer, a server, or a network device) to perform all or some of the steps of the methods described in embodiments of this application. The foregoing readable storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A splash advertisement display method, comprising:
displaying, by the terminal device, a splash advertisement;
detecting, by the terminal device, a first operation of a user, wherein the first operation is an operation of clicking a preset area; and
displaying, by the terminal device, a first interface of a first application, wherein the first interface comprises a first advertisement, and content of the first advertisement is related to content of the splash advertisement.

2. The method according to claim 1, wherein the preset area is an area of the splash advertisement, the preset area does not belong to a skip area of the splash advertisement, and the preset area does not belong to a details viewing area; or the preset area is an advertisement picture display area of the splash advertisement.

3. The method according to claim 1 or 2, wherein the first interface comprises a home page of the first application, or the first interface comprises a slide-down page of the home page of the first application, or the first interface comprises a video play page.

4. The method according to any one of claims 1 to 3, wherein the method further comprises:
displaying, by the terminal device, a second splash advertisement;
determining, by the terminal device, that the user does not click a skip area and the user does not click a details viewing area; and
displaying, by the terminal device, a second interface of the first application, wherein the second interface comprises a second advertisement, and content of the second advertisement is related to content of the second splash advertisement.

5. The method according to any one of claims 1 to 4, wherein the first advertisement is a banner advertisement, or the first advertisement is an interstitial advertisement, or the first advertisement is a floating icon advertisement, and the floating icon advertisement is displayed above a page of the first application.

6. The method according to any one of claims 1 to 5, wherein the second advertisement is a banner advertisement, or the second advertisement is an interstitial advertisement, or the second advertisement is a floating icon advertisement, and the floating icon advertisement is displayed above a page of the first application.

7. The method according to claim 6, wherein preset duration is set for the floating icon, and the floating icon advertisement is displayed on the page of the first application within the preset duration.

8. The method according to any one of claims 1 to 7, wherein the method further comprises:
detecting, by the terminal device, a second operation performed by the user on the first advertisement; and
displaying an advertisement landing page of the first advertisement in response to the second operation.

9. The method according to claim 8, wherein the method further comprises:
detecting, by the terminal device, a third operation performed by the user on the splash advertisement; and
displaying an advertisement landing page of the splash advertisement in response to the third operation, wherein the advertisement landing page of the splash advertisement is the same as the advertisement landing page of the first advertisement.

10. The method according to any one of claims 1 to 9, wherein before the displaying, by the terminal device, a splash advertisement, the method further comprises:
sending, by the terminal device, a splash advertisement request to an advertisement server;
receiving, by the terminal device, a returned message sent by the advertisement server in response to the splash advertisement request, wherein the returned message comprises splash advertisement information and a first advertisement information set, the first advertisement information set comprises one or more pieces of first advertisement information, and advertisement content of the one or more first advertisements is related to advertisement content of the splash advertisement; and
obtaining, by the terminal device, an advertisement material of the splash advertisement and an advertisement material of the first advertisement based on the returned message.

11. The method according to any one of claims 1 to 10, wherein the splash advertisement request comprises one or more of the following parameters: a pre-loading identifier, an advertisement slot identifier, a device identifier, a user identifier, user behavior data, and the like.

12. The method according to any one of claims 1 to 11, comprising:
detecting, by the terminal device, a fourth operation of the user, wherein the fourth operation is an operation of clicking the skip area;
displaying, by the terminal device, a third interface of the first application, and displaying, by the third interface, a third advertisement, wherein content of the third advertisement is unrelated to the content of the splash advertisement; and
obtaining, by the terminal device, an advertisement material of the third advertisement based on a second returned message.

13. The method according to claim 12, wherein the displaying, by the terminal device, a third interface of the first application, and displaying, by the third interface, a third advertisement specifically comprises:
sending, by the terminal device, a third advertisement request to the advertisement server, wherein the third advertisement request is used to request advertisement information to be displayed in the third interface from the advertisement server; and
receiving, by the terminal device, the second returned message sent by the advertisement server in response to the third advertisement request, wherein the second returned message comprises third advertisement information, and advertisement content of the third advertisement information is unrelated to the advertisement content of the splash advertisement.

14. The method according to any one of claims 1 to 13, comprising:
detecting, by the terminal device, the fourth operation of the user, wherein the fourth operation is the operation of clicking the skip area; and
displaying, by the terminal device, the third interface of the first application, and skipping displaying, by the third interface, the first advertisement.

15. The method according to any one of claims 1 to 14, wherein before the sending, by the terminal device, a splash advertisement request to an advertisement server, the method further comprises:
obtaining, by the terminal device, a first operation of the user, wherein the first operation is an operation used to open an application.

16. The method according to any one of claims 1 to 15, wherein the returned message comprises one or more of the following parameters: a download link of an advertisement material, an identifier of an advertisement, a name of the advertisement, a package name of an application, and address information of the terminal device.

17. The method according to any one of claims 1 to 16, wherein the obtaining, by the terminal device, an advertisement material of the splash advertisement and an advertisement material of the first advertisement based on the returned message specifically comprises:
downloading, by the terminal device, the advertisement material of the splash advertisement and the advertisement material of the first advertisement from the advertisement server; or
determining, by the terminal device, whether the advertisement material of the splash advertisement and the advertisement material of the first advertisement are locally cached, and if the advertisement material of the splash advertisement and the advertisement material of the first advertisement are locally cached, obtaining, by the terminal device, the advertisement material of the splash advertisement and the advertisement material of the first advertisement locally.

18. A terminal device, wherein the terminal device comprises a processor and a memory, the processor is coupled to the memory, the memory stores program instructions, and when the program instructions stored in the memory are executed by the processor, the method according to any one of claims 1 to 16 is performed.

19. A computer-readable storage medium, wherein the computer-readable storage medium stores a computer program, the computer program comprises program instructions, and when the program instructions are executed by a processor, the processor is enabled to perform the method according to any one of claims 1 to 16.

20. A chip, comprising a processor, configured to invoke a computer program from a memory and run the computer program, to enable a communication device on which the chip is installed to perform the method according to any one of claims 1 to 16.
